(19)

Europäisches
Patentamt
European
Patent Office
Office européen
des brevets

(11) **EP 3 992 023 A1**

(12) **EUROPEAN PATENT APPLICATION**

(43) Date of publication:
**04.05.2022 Bulletin 2022/18**

(21) Application number: **21204438.2**

(22) Date of filing: **25.10.2021**

(51) International Patent Classification (IPC):
**B60L 58/16** $^{(2019.01)}$

(52) Cooperative Patent Classification (CPC):
**B60L 58/16;** B60L 2260/52; B60L 2260/54

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.10.2020 IN 202041046956**

(71) Applicant: **Hitachi, Ltd.
Tokyo 100-8280 (JP)**

(72) Inventors:
 • **Nandanakrishnan, Vinod Raj
  560055 Bangalore (IN)**

 • **R, Ragesh
  560055 Bangalore (IN)**
 • **Subramanian, Jagadeeswaran
  560055 Bangalore (IN)**
 • **N, Vinoth Kumar
  560055 Bangalore (IN)**
 • **Kawaguchi, Yuki
  Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **METHOD AND SYSTEM FOR PREDICTING RANGE OF AN ELECTRIC VEHICLE**

(57)   Disclosed subject matter is related to field of telematics that provides method and a range predicting system for predicting range of an electric vehicle. The method includes receiving, by the system, input data from data sources. Thereafter, the system predicts energy consumption along one or more routes based on first subset of input data using data based and physics based models. The system then determines available energy based on second subset of input data and an energy degradation factor, and consumed energy based on third subset of input data. Thereafter, the system determines remaining energy level based on the available energy and the consumed energy. Finally, the system determines a range of the electric vehicle based on the remaining energy level and the predicted energy consumption along the one or more routes. The present disclosure enhances accuracy in determining range, and avoids unexpected loss of charge or breakdowns.

FIG.3A

EP 3 992 023 A1

**Description**

## TECHNICAL FIELD

The present disclosure generally relates to field of telematics. Particularly, but not exclusively, the present disclosure relates to a method and system for predicting range of an electric vehicle.

## BACKGROUND

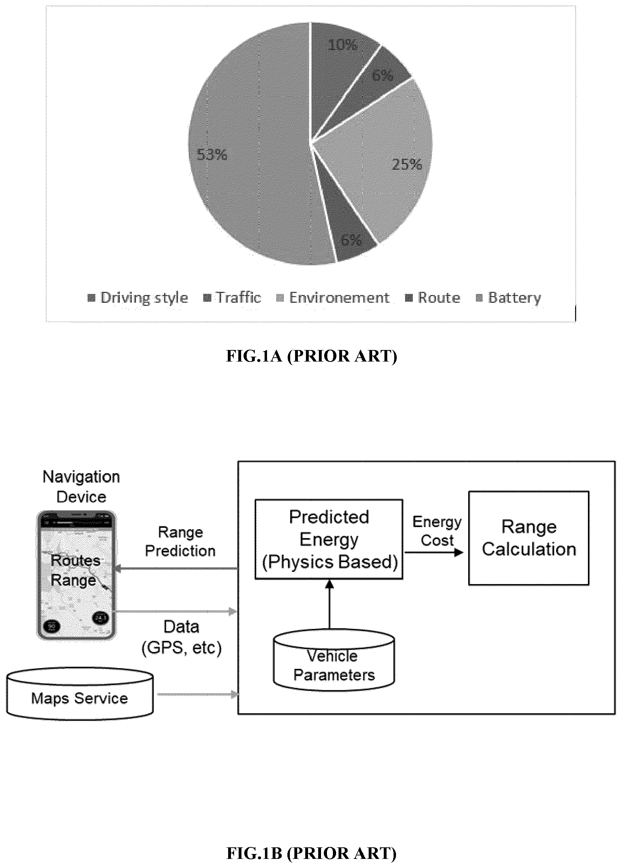

Electric Vehicles (EV) are vehicles which are powered by electricity from off-vehicle sources or could be self-contained with a battery, solar panels, electric generator and the like. Generally, the electric vehicle operators face issues such as range anxiety and forced downtime. These issues may occur due to lack of adequate EV battery charging station network and lack of accurate technologies to predict driving range of the EV that are the major causes for range anxiety. Range of the EV depends on stored energy in battery and energy consumption along a route that the EV is travelling. Further, the energy consumption depends on speed profile of the EV, which in turn depends on stochastic factors such as traffic, driving style, weather conditions and the like, as shown in the **FIG.1A.**

Currently, the existing techniques known in the art predict round trip range of a vehicle using vehicle parameters and speed information of multiple links associated with roadways retrieved from digital maps. **FIG.1B** shows a block diagram of the existing technique wherein attributes such as Global Positioning System (GPS) data, average speed, speed limits, elevation, length, traffic pattern, type of roadway etc. of each roadway are retrieved from maps service and used for prediction of energy by physics-based model, and for range calculation. The existing technique determines total energy consumption by summing up the energy required for traversing each link and node of the roadways. Link is a stretch of road between two nodes and a node is a predefined mark on the road, or the node may be a major intersection on the road. The existing technique considers constant speed while traversing a link and acceleration or deceleration only while traversing a node, which may not provide accurate results as the vehicle may undergo variable acceleration and deceleration during the navigation between the links and nodes, and such factors are not considered for determining the energy consumption in the existing technique. The issue may be more pronounced in EV due to regenerative techniques used for braking or deceleration. Moreover, the existing technique determines the energy consumption only based on the real-time values and fails to consider any aging related effect of the electric vehicle. As evident, energy sources deteriorate with time and their performance, energy retaining capacity and the like may reduce with time, which would majorly impact the computation of energy consumption. Existing techniques hence may not be able to determine the energy consumption and range of the electric vehicle based on such energy consumption accurately. Inaccurate determination of the range of the electric vehicle may lead to ineffective trip planning, aggravates range anxiety among the users of the electric vehicles and results in unexpected loss of charge or breakdowns. Therefore, there exists a need for providing a method and a system to accurately predict travelling range of the EV.

The information disclosed in this background of the disclosure section is only for enhancement of understanding of the general background of the invention and should not be taken as an acknowledgement or any form of suggestion that this information forms the prior art already known to a person skilled in the art.

## SUMMARY

One or more shortcomings of the prior art are overcome and additional advantages are provided through the present disclosure. Additional features and advantages are realized through the techniques of the present disclosure. Other embodiments and aspects of the disclosure are described in detail herein and are considered a part of the claimed disclosure.

Disclosed herein is a method of predicting range of an electric vehicle. The method comprises receiving, by a range predicting system, a plurality of input data from one or more data sources. Thereafter, the method includes predicting energy consumption along one or more routes between a source location and a destination location provided for the electric vehicle, based on a first subset of the plurality of input data using at least one of data based models and a physics based model. Further, the method includes determining available energy of the electric vehicle based on a second subset of the plurality of input data and an energy degradation factor determined using an energy source degradation model. Upon determining the available energy, the method includes determining consumed energy of the electric vehicle while navigating along the one or more routes, based on a third subset of the plurality of input data. Thereafter, the method includes determining remaining energy level of the electric vehicle for navigating along the one or more routes based on the available energy and the consumed energy. Finally, the method includes determining range of the electric vehicle based on the remaining energy level and the predicted energy consumption along the one or more routes.

Further, the present disclosure includes a range predicting system for predicting range of an electric vehicle.

The range predicting system comprises a processor and a memory communicatively coupled to the processor. The memory stores the processor-executable instructions, which, on execution, causes the processor to receive a plurality of input data from one or more data sources. Thereafter, the processor predicts energy consumption along one or more routes between a source location and a destination location provided for the electric vehicle, based on a first subset of the plurality of input data using at least one of data based models and a physics based model. Further, the processor determines available energy of the electric vehicle based on a second subset of the plurality of input data and an energy degradation factor determined using an energy source degradation model. Upon determining the available energy, the processor determines consumed energy of the electric vehicle while navigating along the one or more routes, based on a third subset of the plurality of input data. Thereafter, the processor determines remaining energy level of the electric vehicle for navigating along the one or more routes based on the available energy and the consumed energy. Finally, the processor determines range of the electric vehicle based on the remaining energy level and the predicted energy consumption along the one or more routes.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE ACCOMPANYING DIAGRAMS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

FIG.1A shows an exemplary illustration of different parameters which affect energy consumption of the Electric Vehicle (EV), using a pie chart;

FIG.1B shows a block diagram of an existing technique illustrating calculation of range of a vehicle [PRIOR ART];

FIG.2A shows an exemplary architecture for predicting range of an electric vehicle in accordance with some embodiments of the present disclosure;

FIG.2B shows an exemplary architecture along with exemplary data inputs and data flow, in accordance with some embodiments of the present disclosure;

FIG.3A shows a detailed block diagram of a range predicting system for predicting range of an electric vehicle in accordance with some embodiments of the present disclosure;

FIG.3B shows an exemplary illustration of "Step" on the stretch of a road in accordance with some embodiments of the present disclosure;

FIG.3C shows an exemplary block diagram illustrating a method of determining step acceleration energy based on first or second data based models in accordance with some embodiments of the present disclosure;

FIG.3D shows a flowchart to illustrate training procedure of first data based model to determine the step acceleration energy, in accordance with some embodiments of the present disclosure;

FIG.3E shows a table comprising exemplary input and output dataset used for training the first database model, in accordance with some embodiments of the present disclosure;

FIG.3F shows a flowchart to illustrate training procedure of a second data based model to determine the step acceleration energy, in accordance with some embodiments of the present disclosure;

FIG.3G(1) shows an exemplary graph plotted for specific acceleration energy vs average speed, in accordance with some embodiments of the present disclosure;

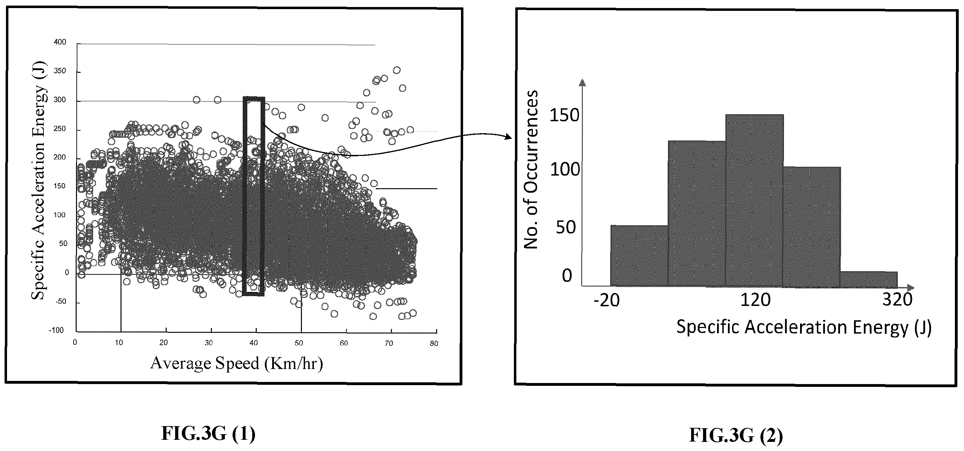

FIG.3G(2) shows an exemplary specific acceleration energy distribution, in accordance with some embodiments of the present disclosure.

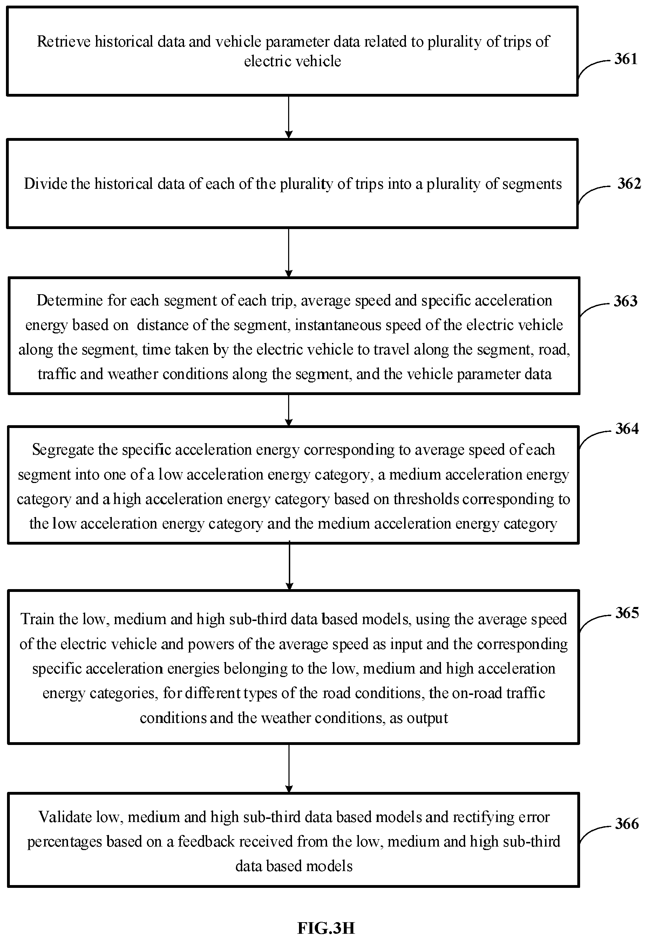

**FIG.3H** shows a flowchart to illustrates training procedure of a third data based model to determine the step acceleration energy, in accordance with some embodiments of the present disclosure.

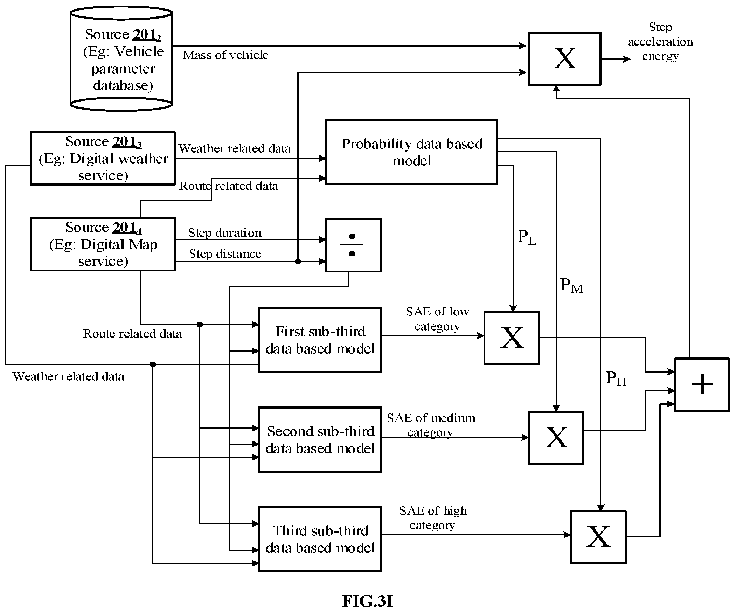

**FIG.3I** shows an exemplary block diagram illustrating a method of determining step acceleration energy based on a third data based model in accordance with some embodiments of the present disclosure;

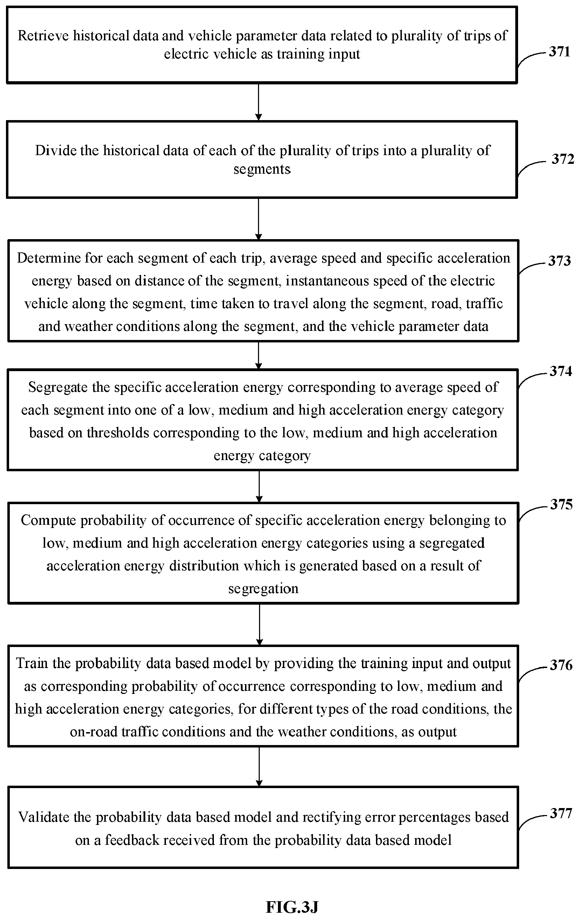

**FIG.3J** shows a flowchart illustrating the training procedure of the probability data based model in accordance with some embodiments of the present disclosure;

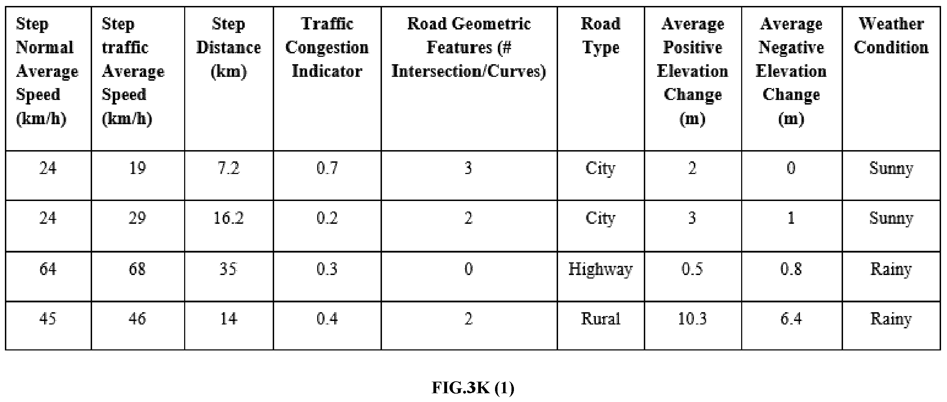

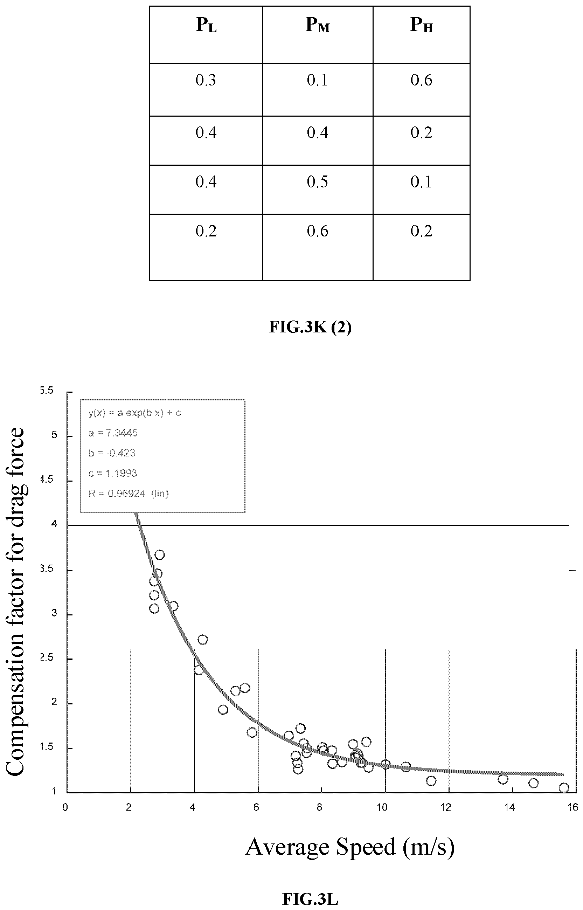

**FIG.3K (1)** shows a table indicating an exemplary training input for training the probability data based model in accordance with some embodiments of the present disclosure;

**FIG.3K (2)** shows a table indicating an exemplary training output of the probability data based model in accordance with some embodiments of the present disclosure;

**FIG.3L** shows an exemplary graph indicating average speed vs compensation factor of the drag force in accordance with some embodiments of the present disclosure;

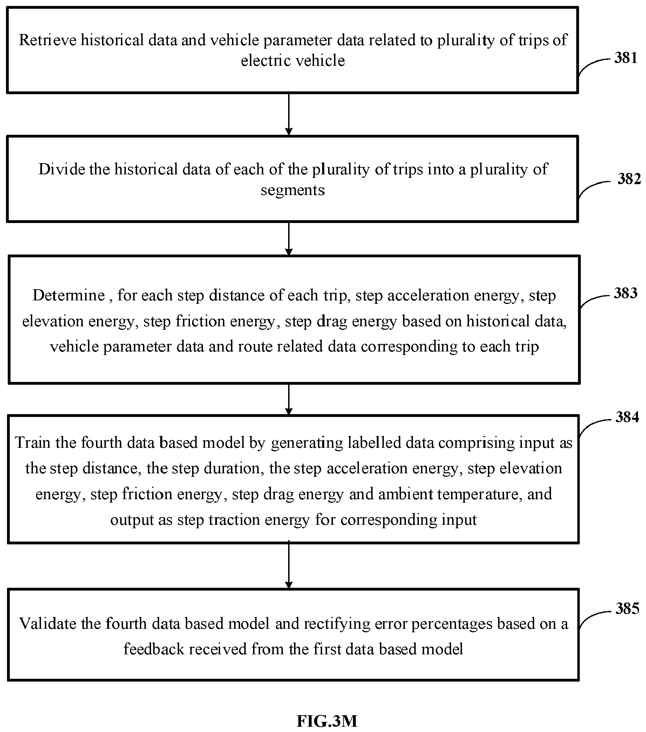

**FIG.3M** shows a flowchart illustrating a training process for training the fourth data based model to determine the step traction energy in accordance with some embodiments of the present disclosure;

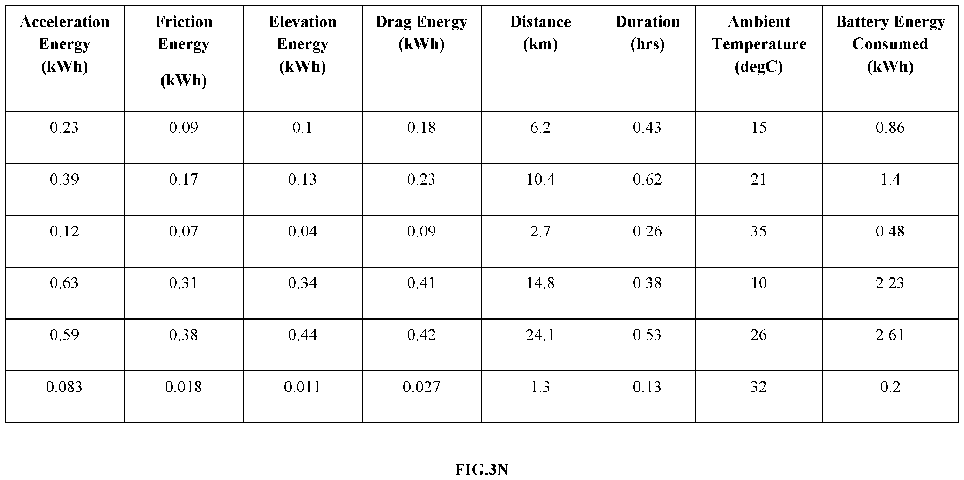

**FIG.3N** shows a table indicating exemplary input values corresponding to acceleration energy, friction energy, elevation energy and drag energy used for training the fourth data based model in accordance with some embodiments of the present disclosure;

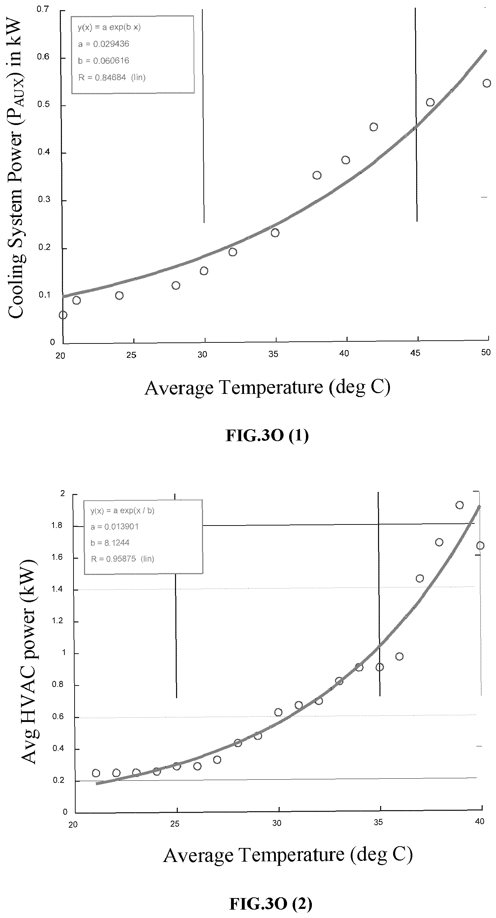

**FIG.3O(1)** shows a graph indicating ambient temperature represented along X-axis and cooling system power ($P_{AUX}$) represented along the Y-axis in accordance with some embodiments of the present disclosure;

**FIG.3O(2)** shows a graph indicating ambient temperature represented along X-axis and average HVAC power ($P_{HVAC}$) represented along the Y-axis in accordance with some embodiments of the present disclosure;

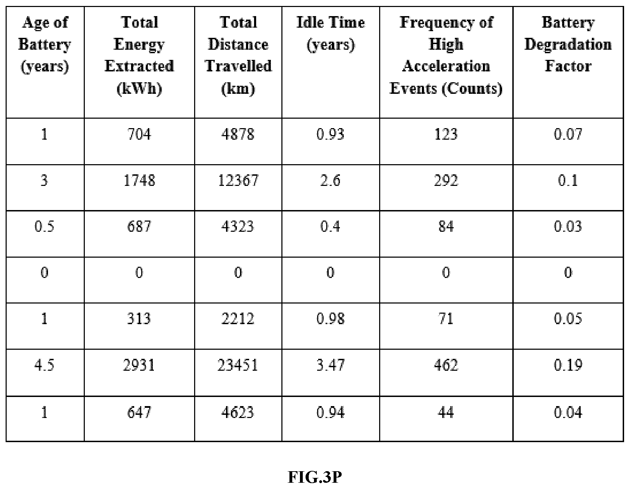

**FIG.3P** shows an exemplary look-up table with exemplary values indicating input to an energy source degradation model in accordance with some embodiments of the present disclosure;

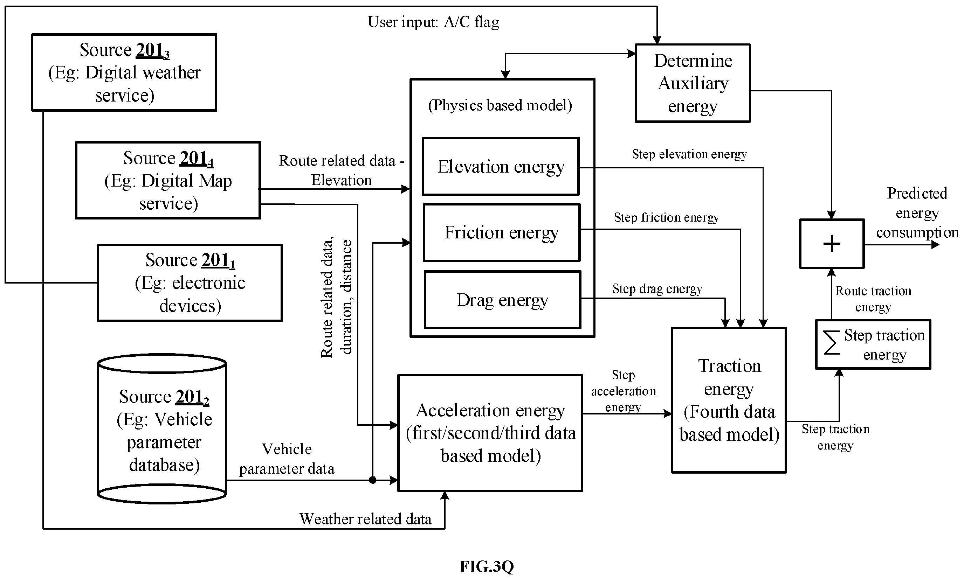

**FIG.3Q** shows an exemplary block diagram illustration an overall method of predicting energy consumption based on exemplary inputs in accordance with some embodiments of the present disclosure;

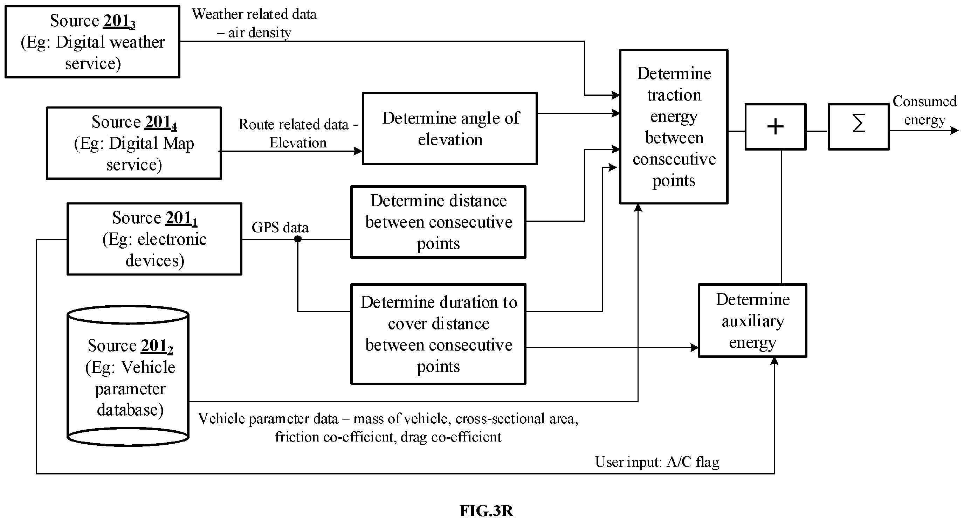

**FIG.3R** shows an exemplary block diagram illustrating a method of determining consumed energy based on exemplary inputs in accordance with some embodiments of the present disclosure;

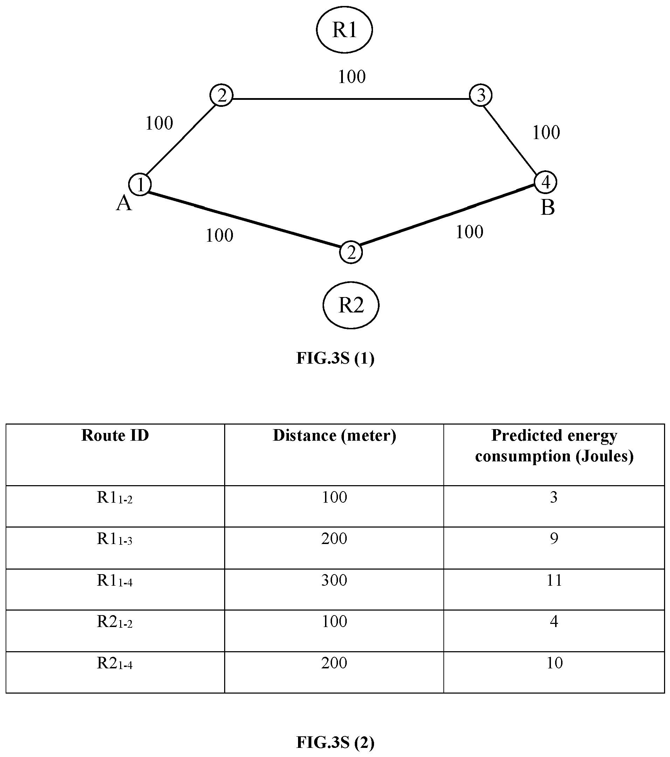

**FIG.3S (1)** shows an exemplary scenario comprising two routes R1 and R2 between a source location "A" and destination location "B" in accordance with some embodiments of the present disclosure;

**FIG.3S (2)** shows a table indicating exemplary attributes related to routes R1 and R2 of **FIG.3S (1)** in accordance with some embodiments of the present disclosure;

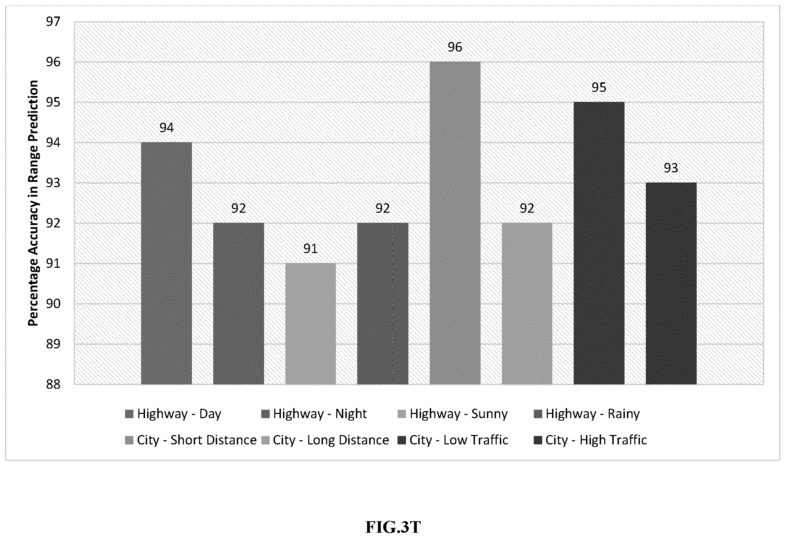

**FIG.3T** shows a bar graph indicating accuracy of the range prediction performed by the range predicting system in accordance with some embodiments of the present disclosure;

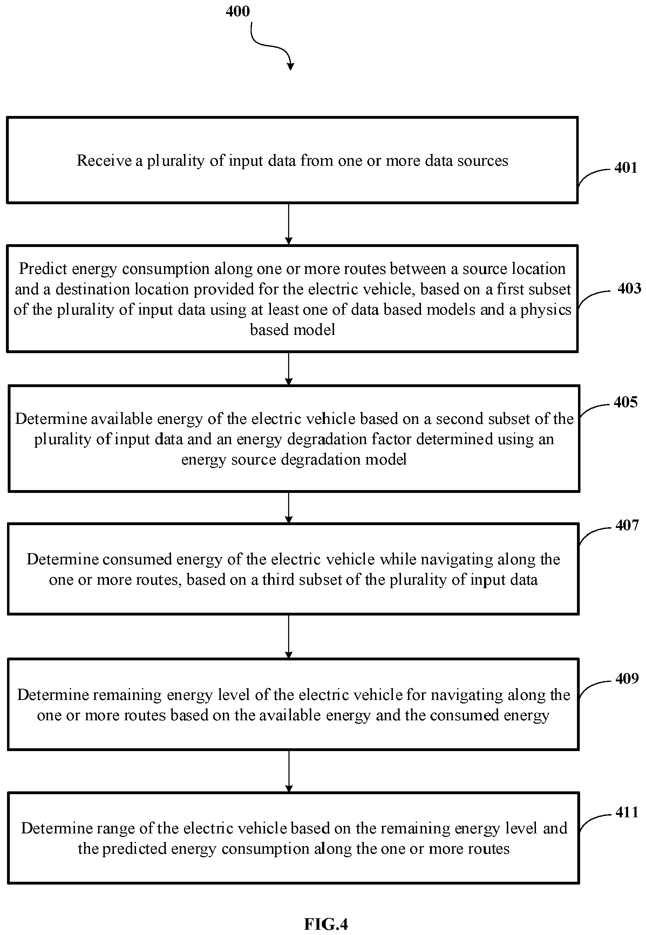

**FIG.4** shows a flowchart illustrating a method of predicting range of an electric vehicle in accordance with some embodiments of the present disclosure; and

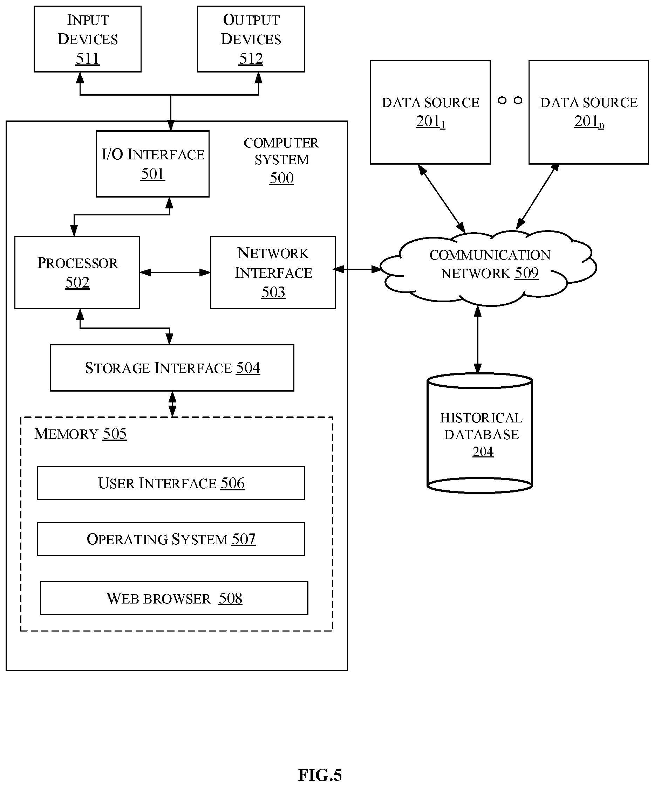

**FIG.5** is a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

## DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

Disclosed herein are a method and system for predicting range of an electric vehicle using a range predicting system. In some embodiments, the range predicting system may be configured in the electric vehicle. In some other embodiments, the range predicting system may be communicatively connected with one or more electronic control units of the electric vehicle via devices within the electric vehicle, via remote devices connected with the electric vehicle or via cloud infrastructure. In this embodiment, the devices and the remote devices may refer to mobile phones, laptop, tablet phones, and the like, which have the ability to connect with the one or more electronic control units of the electric vehicle. The method includes receiving, by a range predicting system, a plurality of input data from one or more data sources associated with the electric vehicle. In some embodiments, the one or more data sources may be services and databases that provide data which is broadly categorized as route related data, weather related data, vehicle parameter data and data from one or more electronic devices communicatively associated with the electric vehicle. Content of these broad categories are discussed in detail in the further sections of the present disclosure. As an example, the services providing data may be digital maps service, digital weather service, and the like. Thereafter, the range predicting system may predict energy consumption along one or more routes between a source location and a destination location provided for the electric vehicle, based on a first subset of the plurality of input data using at least one of data based models and a physics based model. As an example, the data based models may be Artificial Intelligence (AI) based models or prediction models used in the context of the present disclosure. Further, the range predicting system may determine available energy of the electric vehicle based on a second subset of the plurality of input data and an energy degradation factor determined using an energy source degradation model. Upon determining the available energy, the range predicting system may determine consumed energy of the electric vehicle while navigating along the one or more routes, based on a third subset of the plurality of input data. Thereafter, the range predicting system may determine remaining energy level of the electric vehicle for navigating along the one or more routes based on the available energy and the consumed energy. In some embodiments, the consumed energy and the corresponding remaining energy level of the electric vehicle may be determined at each predefined time interval. In other words, the consumed energy and the corresponding remaining energy level of the electric vehicle are determined at every instance, when a new Global Positioning System (GPS) data is received from a navigation device or any electronic device communicatively connected with the electric vehicle. In some embodiments, each of the energy parameters described above such as the available energy, consumed energy, predicted energy consumption etc., may be determined one of parallelly or sequentially by the range predicting system. Finally, the range predicting system may determine range of the electric vehicle based on the remaining energy level and the predicted energy consumption along the one or more routes.

The present disclosure enables accurate determination of range level due to consideration of important parameters that affect the energy consumption in an electric vehicle such as energy consumption due to acceleration or deceleration along the route while the electric vehicle is navigating, and aging of battery source. Energy consumption may increase and energy retaining power may decrease with aging of the battery source. Therefore, this acts an important parameter in accurately determining range of the electric vehicle. Additionally, the present disclosure performs such energy consumption prediction based on a hybrid model i.e. a model which is a combination of AI based model and Physics based model. Therefore, the parameters such as acceleration energy, traction energy and the like are determined based on a combination of the historical data and the real-time data, which in turn enhances accuracy in determination of range of the electric vehicle. The physics based model is used for prediction of energy losses due to road friction, elevation and aerodynamic drag. Further, the energy source degradation model in the present disclosure enables including the effect of aging of the battery on range of the vehicle, which yet again adds to the enhancement in the accuracy in determination of range level. Therefore, the present disclosure alleviates range anxiety among the users of the electric vehicles and thus aids in better planning of trip and avoiding unexpected loss of charge or breakdowns.

The present disclosure may be used for informing the driver of the electric vehicle whether a given destination is reachable or not with respect to the available energy in the electric vehicle. Further, the present disclosure may be used for efficient trip planning and also planning when and where to recharge the energy source of the electric vehicle, if the destination is determined to be not reachable in view of the available energy. Furthermore, the present disclosure may be used for selecting the route which consumes minimum energy compared to other routes or the route that comprises sufficient number of charging stations to charge the energy source of the electric vehicle, if destination is not reachable with the available energy.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

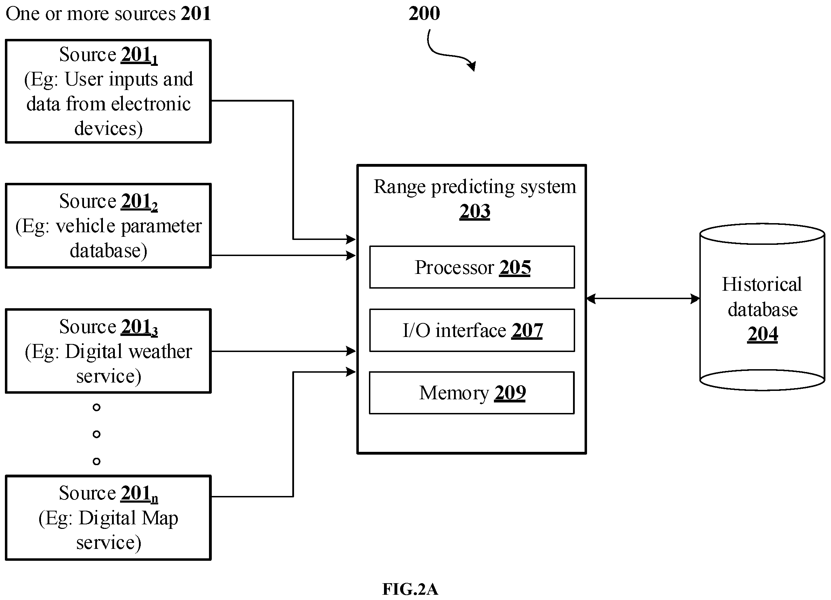

**FIG.2A** shows an exemplary architecture for predicting range of an electric vehicle in accordance with some embodiments of the present disclosure.

In an embodiment, the exemplary architecture **200** comprises data source **201$_1$** to data source **201$_n$** (collectively referred as one or more data sources **201**), a range predicting system **203** and a historical database **204**. The one or more data sources **201** may be associated with the range predicting system **203**. The one or more data sources **201** may include, but not limited to, electronic devices such as a navigation device, a smart phone, On-Board Diagnostic (OBD) device and the like communicatively connected with the electric vehicle, digital maps service, digital weather service and a vehicle parameter database. As an example, the digital maps service may be any data source or a service provider, who provides route related data. As an example, the digital weather service may be any data source or a service provider who provides weather related data. In some embodiments, the one or more data sources **201** may provide a plurality of input data to the range predicting system **203**. As an example, the one or more electronic devices may provide input data that may include, but not limited to, user inputs such as source location and destination location, A/C flag, battery percentage, initial energy level of the battery at the source location (also referred as state of charge), the Global Positioning System (GPS) data and the like, to the range predicting system **203**. Further, the digital maps service may provide route related data as the input data that may include, but not limited to, one or more routes from the source location to the destination location, attributes associated with the route such as distance between the source location and the destination location, estimated duration to reach the destination location, directions from the source location to the destination location, type of roads along the route, elevation along the route, charging stations along the route and the like. Further, the digital weather service may provide weather related data as the input data that may include, but not limited to, weather related information along the route from the source location to the destination location such as, type of weather along the route such as rainy, sunny, cold, windy and the like, temperature, humidity, wind speed and other related information. Further, the vehicle parameter database may provide vehicle parameter data as the input data that may include, but not limited to, values associated with vehicle parameters such as vehicle mass, cross-sectional area, drag co-efficient, rolling friction co-efficient, energy source rated capacity (i.e. battery rated capacity) and the like.

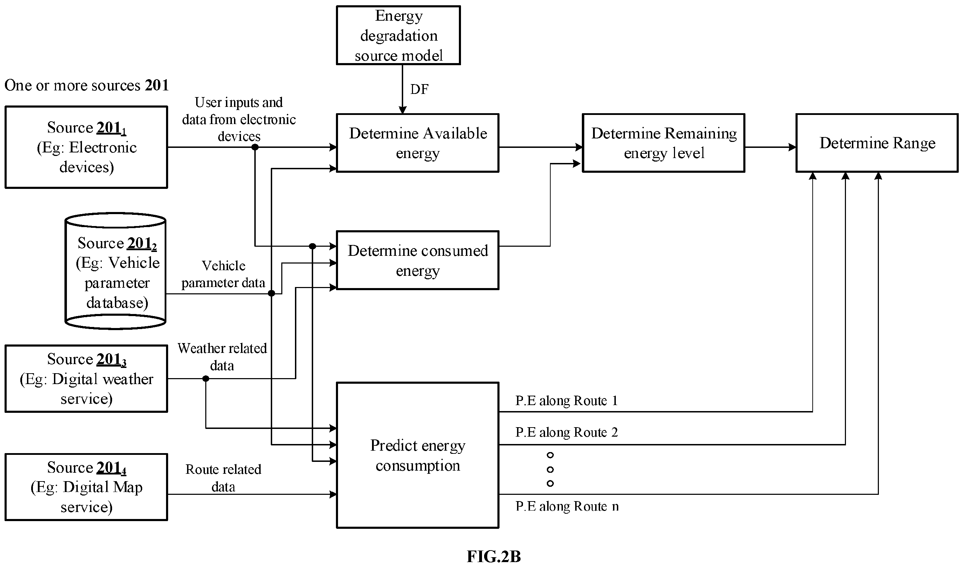

Further, the range predicting system **203** may include a processor **205**, an Input/Output (I/O) interface **207** and a memory **209**. The I/O interface **207** may receive the plurality of input data from the one or more data sources **201** via a communication network, and store the input data in the memory **209**. In some embodiments, the communication network may be a wired communication network or a wireless communication network. The processor **205** may predict energy consumption along the one or more routes between the source location and the destination location provided for the electric vehicle, based on a first subset of the plurality of input data, as shown in the **FIG.2B**. As an example, the first subset of the plurality of input data may include, but not limited to, the route related data, the vehicle parameter data, the data provided by the one or more electronic devices communicatively connected with the electric vehicle, and the weather related data. In some embodiments, the processor **205** may predict the energy consumption using at least one of data based models and a physics based model. As an example, the data based models may include Artificial Intelligence (AI) based models, prediction models, and the like. In some embodiments, the data based models used in the present disclosure may be pre-trained using historical data stored in the historical database **204** associated with the range predicting system **203**. The historical data may include data related to the previous trips of the electric vehicle, such as, source locations, destination locations, navigated routes, road conditions along the route, weather conditions along the route, speed along the route, distance travelled, time taken to cover the distance, and on-road traffic conditions, GPS data of the electric vehicle, range of the electric vehicle in different trips under different conditions, state of charge of the battery during each trip, energy consumption, battery voltage and battery current during each trip and the like.

Further, the physics based models used for predicting energy consumption may be models that determine results based on combination of mathematical equations and measured values such as sensor values, either real-time or static. In an embodiment, the processor **205** may determine the parameter "available energy" based on a second subset of the plurality of input data and an energy degradation factor determined using one of the physics based models, for example an energy source degradation model. In some embodiments, the energy source degradation model may be configured in the range predicting system **203**. In some other embodiments, the energy source degradation model may be externally associated with the range predicting system **203**. As an example, the second subset of the plurality of input data may include, but not limited to, the initial energy level at the source location of the electric vehicle received as part of the data provided by the one or more electronic devices communicatively connected with the electric vehicle, and battery capacity received as part of the vehicle parameter data. In an embodiment, the one or more electronic devices may be edge computing devices.

Further, as shown in the **FIG.2B**, the processor **205** may determine a parameter "consumed energy" that indicates energy consumed by the electric vehicle in real-time. In some embodiments, the parameter "consumed energy" is determined based on a third subset of the plurality of input data. As an example, the third subset of the plurality of input data used for determining the consumed energy may include, but not limited to, an initial energy level at the source location of the electric vehicle, Global Positioning System (GPS) data and user inputs received as part of the data provided by one or more electronic devices communicatively connected with the electric vehicle, the route related data, the vehicle parameter data and weather related data. Thereafter, the processor **205** may determine remaining energy level of the electric vehicle for navigating along the one or more routes based on the determined available energy and the determined consumed energy. In some embodiment, the processor **205** may determine the consumed energy and the corresponding remaining energy level of the electric vehicle at each predefined time interval. As an example, the predefined time interval may be 1 sec.

Further, the processor **205** may predict range of the electric vehicle (output) based on the remaining energy level and the predicted energy consumption along the one or more routes as shown in the **FIG.2B**. Thereafter, the processor **205** may select a route among the one or more routes for navigation. In some embodiments, the selected route may be one of an optimal route that is predicted to consume minimum energy compared to rest of the one or more routes, a route that comprises sufficient charging stations for charging the electric vehicle, or a route selected by a user for navigation among the one or more routes, whose predicted energy consumption is less than the available energy. For instance, the user may select a scenic route compared to a highway. In some other embodiments, the processor **205** may select the route upon predicting the energy consumption. Thereafter, the consumed energy, remaining energy level and the range of the electric vehicle may be determined with respect to the selected route.

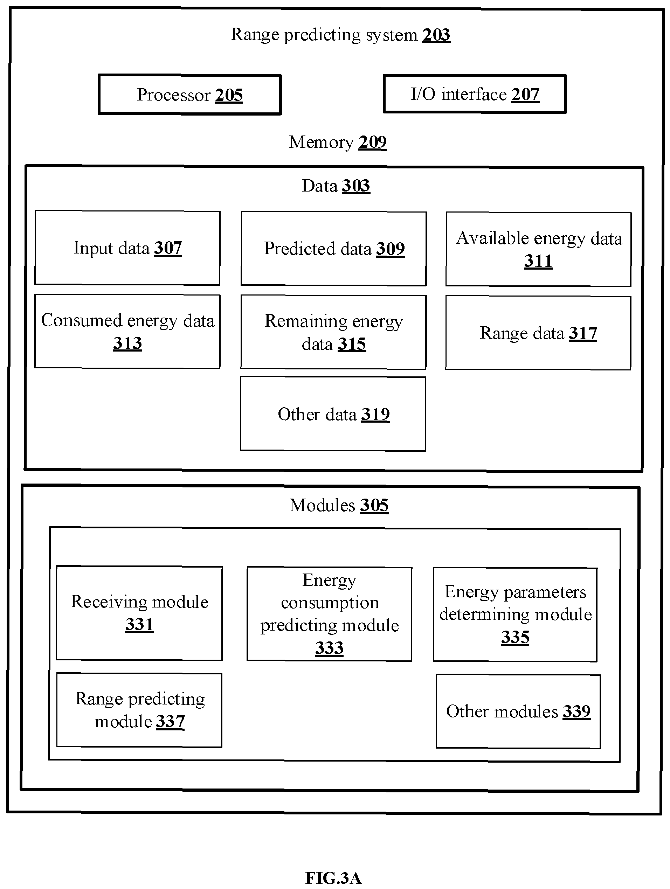

**FIG.3A** shows a detailed block diagram of a range predicting system for predicting range of an electric vehicle in accordance with some embodiments of the present disclosure.

In some implementations, the range predicting system **203** may include data **303** and modules **305**. As an example, the data **303** is stored in the memory **209** configured in the range predicting system **203** as shown in the **FIG.3A**. In one embodiment, the data **303** may include input data **307**, predicted data **309**, available energy data **311**, consumed energy data **313**, remaining energy data **315**, range data **317** and other data **319**. In the illustrated **FIG.3A**, modules **305** are described herein in detail. In some embodiments, the data **303** may be stored in the memory **209** in form of various data structures. Additionally, the data **303** can be organized using data models, such as relational or hierarchical data models.

In some embodiments, the input data **307** may include, but not limited to, data received from one or more data sources **201**. As an example, the one or more data sources **201** may include, but not limited to, one or more electronic devices such as a navigation device, a smart phone, On-Board Diagnostic (OBD) device and the like communicatively connected with the electric vehicle, digital maps service, digital weather service and a vehicle parameter database. As an example, the one or more electronic devices may provide the input data **307** that may include, but not limited to, user inputs such as source location and destination location, Air conditioner (A/C) flag, battery percentage, initial energy level of the battery at the source location (also referred as state of charge), the Global Positioning System (GPS) data and the like, to the range predicting system **203**. Further, the digital maps service may provide route related data as the input data **307** that may include, but not limited to, one or more routes from the source location to the destination location, attributes associated with the route such as distance between the source location and the destination location, estimated duration to reach the destination location, directions from the source location to the destination location, type of roads along the route, elevation and slopes along the route, charging stations along the route and the like. As an example, the type of roads along the route may include, but not limited to, i.e. a highway, urban/city roads, rural roads, gravel roads, multi-lane roads, double lane roads and the like. Further, the digital weather service may provide weather related data as the input data **307** that may include, but not limited to, weather related information along the route from the source location to the destination location such as, type of weather along the route such as rainy, sunny, cold, windy and the like, temperature, humidity, wind speed and other related information. Further, the vehicle parameter database may provide vehicle parameter data as the input data **307** that may include, but not limited to, values associated with vehicle parameters such as vehicle mass, cross-sectional area, drag co-efficient, rolling friction co-efficient, energy source rated capacity (i.e. battery rated capacity) and the like.

In some embodiments, the predicted data **309** may indicate predicted energy consumption of the electric vehicle along one or more routes between the source location and the destination location. As an example, the predict data **309** may include, but not limited to, values indicating predicted energy consumption along the one or more routes.

In some embodiments, the available energy data **311** may indicate energy available in the electric vehicle for navigation. As an example, the available energy data **311** may include, but not limited to, values indicating available energy of the electric vehicle for navigation.

In some embodiments, the consumed energy data **313** may indicate energy consumed by the electric vehicle while navigating. As an example, the consumed energy data **313** may include, but not limited to, values indicating energy consumed by the electric vehicle while navigating.

In some embodiments, the remaining energy data **315** may indicate energy remaining in the battery of the electric vehicle for navigation, determined in real-time. As an example, the remaining energy data **315** may include, but not limited to, values indicating remaining energy level in the electric vehicle for navigation.

In some embodiments, the range data **317** may indicate range of the electric vehicle, i.e. distance upto which the electric vehicle can travel with respect to the initial level of energy at the source location, the available energy for navigation, the consumed energy while navigating, the remaining energy level while navigating, and predicted energy consumption to reach the destination location. As an example, the range data **317** includes values indicating range of the electric vehicle.

In some embodiments, the other data **319** may store data, including temporary data and temporary files, generated by the modules **305** for performing the various functions of the range predicting system **203**. In some embodiments, the other data **319** may also include the data associated with the trained data based models, physics based models for implementing the method of the present disclosure to predict range of the electric vehicle.

In some embodiments, the data **303** stored in the memory **209** may be processed by the modules **305** of the range predicting system **203**. The modules **305** may be stored within the memory **209**. In an example, the modules **305** communicatively coupled to the processor **205** configured in the range predicting system **203**, may also be present outside the memory **209** as shown in **FIG.3A** and implemented as hardware. As used herein, the term modules refer to an application specific integrated circuit (ASIC), an electronic circuit, a processor (shared, dedicated, or group) and memory that execute one or more software or firmware programs, a combinational logic circuit, and/or other suitable components that provide the described functionality.

In an embodiment, the modules **305** may include, for example, a receiving module **331**, a energy consumption predicting module **333**, a energy parameters determining module **335**, a range predicting module **337**, and other modules **339**. The other modules **339** may be used to perform various miscellaneous functionalities of the range predicting system **203**. For instance, the other modules may include the modules required for training data based models and also modules to interact with the data based models and the physics based models to perform various functionalities of the present disclosure. As an example, the data based models may be Artificial Intelligence (AI) based models, prediction models and the like. In some embodiments, the AI models may be realized by using Artificial Neural Networks (ANNs) or by using polynomial regression techniques. In the present disclosure, the data based models used in the process of predicting range of the electric vehicle are a first data based model, a second data based model and a third data based model for determining step acceleration energy, a fourth data based model for determining step traction energy, and a probability data based model for determining a probability of occurrence of the specific acceleration energy belonging to one or more categories. On the other hand, the physics based models may be models that determine results based on combination of mathematical equations and measured values such as sensor values, either real-time or static. In the present disclosure, the physics based models may be used in the process of predicting energy consumption i.e. for determining step friction energy, step drag energy and step elevation energy. In some embodiments, one physics based model may be used for determining step friction energy, step drag energy and step elevation energy. In some other embodiments, three different physics based models may be used for determining each of step friction energy, step drag energy and step elevation energy. It will be appreciated that such aforementioned modules **305** may be represented as a single module or a combination of different modules.

In some embodiments, the receiving module **331** may receive plurality of input data **307** from one or more data sources **201** associated with the range predicting system **203**. As an example, the one or more data sources **201** may include, but not limited to, one or more electronic devices such as a navigation device, a smart phone, OBD device and the like communicatively connected with the electric vehicle, digital maps service, digital weather service and a vehicle parameter database. In some embodiments, the plurality of input data **307** received from the one or more data sources **201** may be broadly categorized as the data received from the one or more electronic devices, the route related data, the weather related data and the vehicle parameter data.

In some embodiments, the energy consumption predicting module **333** may predict the energy consumption along one or more routes. The one or more routes may be routes leading the electric vehicle from a particular source location to a destination location provided by a user of the electric vehicle. As an example, consider the source location is "XYZ" and the destination location is "PQR", then the energy consumption predicting module **333** may predict the energy consumption of the electric vehicle along one or more routes that are generated for navigating from the source location "XYZ" to the destination location "PQR" in the electric vehicle. In some embodiments, the energy consumption predicting module **333** may predict the energy consumption based on a first subset of the plurality of input data **307** using at least one of data based models and a physics based model. As an example, the first subset of the plurality of input data **307** may include, but not limited to, the route related data, the vehicle parameter data, the data provided by the one or more electronic devices communicatively connected with the electric vehicle, and the weather related data.

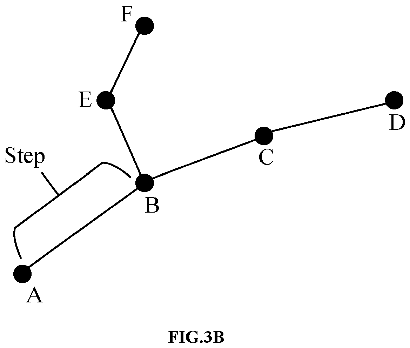

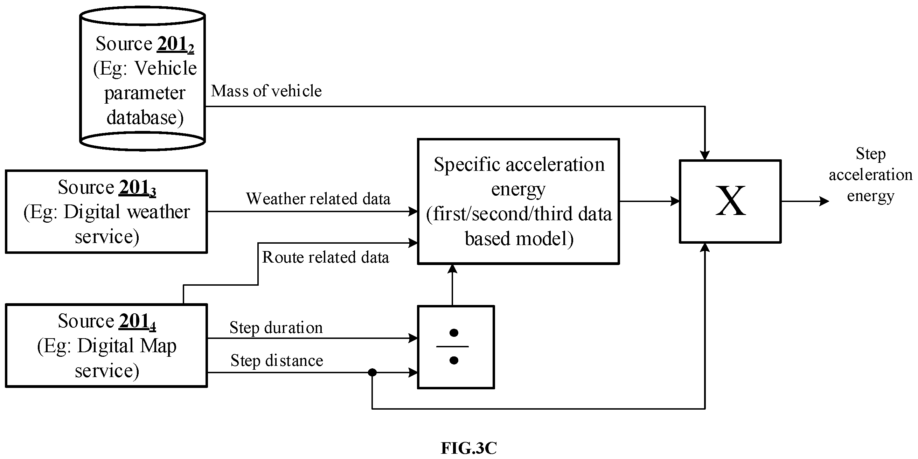

In some embodiments, to predict the energy consumption along the one or more routes using the first subset data, the energy consumption predicting module **333** may initially determine a step acceleration energy. In some embodiments, step is generally a stretch of road between one node and another node. As an example, a node may be a predefined mark on the road, or the node may be a major intersection on the road. A simple exemplary representation of "Step" is as shown in the **FIG.3B**. In the **FIG.3B**, "A", "B", "C", "D" are exemplary nodes, and the stretch between "A" and "B", "B" and "C", and "C" and "D" is referred to as the "Step". In some embodiments, step acceleration energy may refer to the acceleration energy of the electric vehicle along the step. In some embodiments, energy consumption predicting module **333** may determine the step acceleration energy based on a step distance and a step duration predicted relative to the route related data for the step distance, the weather related data for the step distance, and the vehicle parameter data, as shown in the **FIG.3C**. In some embodiments, the step acceleration energy may be determined using one of a first data based model, a second data based model or a third data based model. As an example, the data based models may be AI models or prediction models. The present disclosure is explained using AI models, however, this should not be construed as a limitation of the present disclosure. In some embodiments, the AI models may be realized using the artificial Neural Networks (NN) or by using polynomial regression techniques.

In some embodiments, each of the first data based model, the second data based model and the third data based model may be pre-trained to determine the step acceleration energy. Below given is the training process of each of the first data based model, the second data based model and the third data based model.

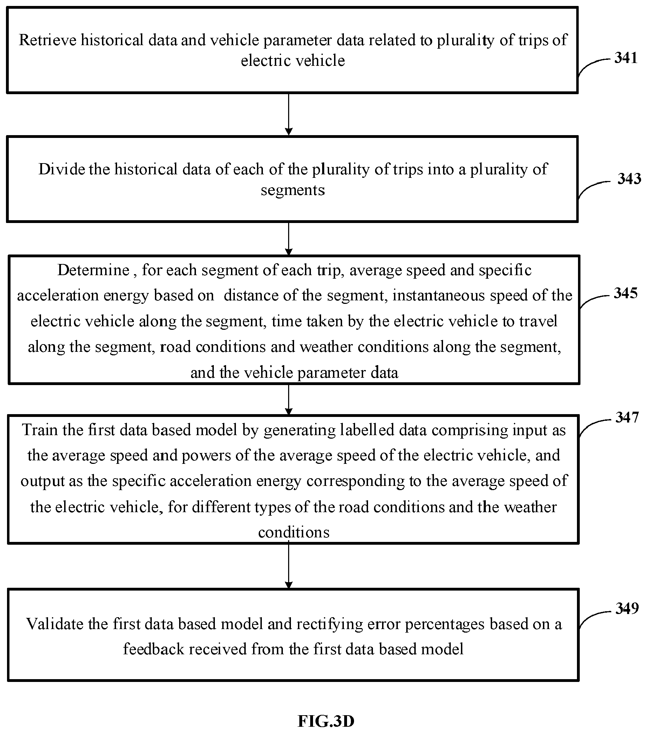

**FIG.3D** shows a flowchart to illustrate training procedure of the first data based model to determine the step acceleration energy.

At **block 341**, during the training phase, the energy consumption predicting module **333** may retrieve historical data and the vehicle parameter data related to each of a plurality of trips of the electric vehicle. In some embodiments, the historical data may include, but not limited to, different road conditions and weather conditions during the trip, speed of the electric vehicle under the different road conditions and weather conditions, and time taken by the electric vehicle to travel along the different road conditions and weather conditions. In some embodiments, the vehicle parameter data may include values associated with vehicle parameters such as vehicle mass, cross-sectional area, drag co-efficient, rolling friction co-efficient, percentage of energy regenerated while decelerating, energy source rated capacity (i.e. battery source rated capacity) and the like.

At **block 345**, during the training phase, the energy consumption predicting module **333** may divide the historical data of each of the plurality of trips into a plurality of segments to perform computation based on a moving window segmentation technique. In some embodiments, each "Step" may be divided into multiple segments of an equal length or a variable length.

At **block 345**, during the training phase, the energy consumption predicting module **333** may determine for each segment of each trip, average speed and specific acceleration energy based on distance of the segment, instantaneous speed of the electric vehicle along the segment, time taken by the electric vehicle to travel along the segment, the road conditions along the segment, the weather conditions along the segment, and the vehicle parameter data. The average speed and the specific acceleration energy corresponding to the average speed, determined for each segment of each trip may be stored in the memory **209** or in a database associated with the range predicting system **203**.

In some embodiments, the average speed of the electric vehicle for each segment (also referred as segment average speed) may be determined using the below **Equation 1**.

$$\text{Segment Average Speed} = \frac{\int_0^t V dt}{t} \quad \text{---------------- Equation 1}$$

In the above **Equation 1**,

"$t$" refers to time required for travelling the segment; and
"$V$" refers to instantaneous speed of the vehicle.

In some embodiments, the specific acceleration energy of the electric vehicle for each segment (also referred as segment specific acceleration energy) may be determined using the below **Equation 2**.

$$\text{Segment Specific Acceleration Energy} = \begin{cases} \int_0^t V * \left(\frac{dv}{dt}\right) dt\,; \frac{dv}{dt} \geq 0 \\ \int_0^t \beta * V * \left(\frac{dv}{dt}\right) dt\,; \frac{dv}{dt} < 0 \end{cases}$$

----------- **Equation 2a**

In the above **Equation 2a**,

"t" refers to time required for travelling the segment;

"V" refers to instantaneous speed of the vehicle; and

"β" refers to percentage of energy regenerated while decelerating, which is a function of speed and force, which may be implemented as a lookup table or a nonlinear polynomial function. The lookup table may be developed based on the historical data of the electric vehicle. In some embodiments, the parameter force "F" is calculated using the below **Equation 2b**, which is in turn used for generating the look-up table for "β".

$$F = m\frac{dv}{dt} + mg\sin\alpha + C_r\, mg\cos\alpha + \frac{1}{2}\rho_{air}\, C_d\, A v^2$$ ------- **Equation 2b**

In the above **Equation 2b**,

"$Cr$" refers to rolling friction coefficient, received from a vehicle parameter database. As an example, value of the rolling friction coefficient may be 0.012;

"$m$" refers to mass of the vehicle, received as part of the vehicle parameter data from the vehicle parameter database;

"g" refers to acceleration due to gravity, received as part of the vehicle parameter data from the vehicle parameter database;

"$\alpha$" refers to angle of elevation, which is determined using elevation information received as part of the route related data from the digital maps service;

"$\rho_{air}$" refers to density of air, received as part of the weather related data from the weather service. As an example, density of air may be 1.22 Kg/m$^3$;

"$C_d$" refers to aerodynamic drag coefficient of the vehicle, received as part of the vehicle parameter data from the vehicle parameter database. As an example, value of the drag coefficient may be 0.28.

"A" refers to area of cross-section of the electric vehicle, received as part of the vehicle parameter data from the vehicle parameter database. As an example, value of the area of cross-section of the electric vehicle may be 2.756 m$^2$;

"$v$" refers to average speed, received as part of the route related data from the digital maps service or average speed calculated from instantaneous vehicle speed profile received from one or more electronic devices communicatively connected to the electric vehicle; and

In some embodiments, when average speed and force values are intermediate, "β" is calculated using interpolation techniques such as bilinear interpolation, spline interpolation and the like.

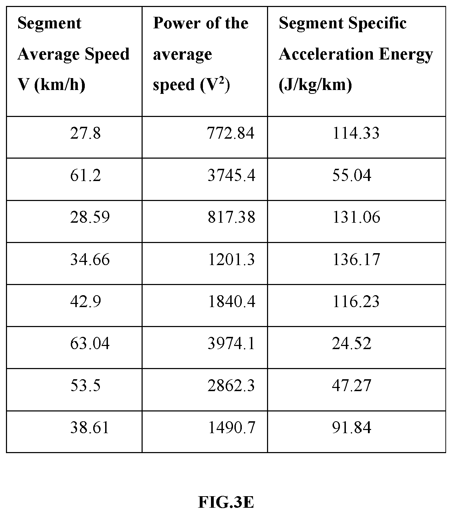

At **block 347**, during the training phase, the energy consumption predicting module **333** may train the first data based model by generating labelled data. In some embodiments, the labelled data may include input as the average speed and powers of the average speed of the electric vehicle, and output as the specific acceleration energy corresponding to the average speed of the electric vehicle, for different types of the road conditions and the weather conditions. In some embodiments, such labelled data is generated by reviewing and logically correlating the average speed and the specific acceleration energy corresponding to the average speed, determined for each segment of each of the trips, collectively. **FIG.3E** shows a table comprising exemplary input and output dataset used for training the first database model.

At **block 349**, during the training phase, the energy consumption predicting module **333** may validate the first data based model and rectify error percentages based on a feedback received from the first data based model. In some embodiments, validation is meant to decrease the error percentages over a period of time during the training phase.

Therefore, in real-time, when the energy consumption predicting module **333** uses the first data based model to determine step acceleration energy, the energy consumption predicting module **333** may initially determine the specific acceleration energy by providing the step distance, a step duration predicted relative to the route related data for the step distance, the route related data and the weather related data for the step distance, as input to the first data based model as shown in the **FIG.3C**. Since, the first data based model is pre-trained, the first data based model provides the specific acceleration energy suitable for the input, as output. Thereafter, the energy consumption predicting module **333** may determine the step acceleration energy by combining the step distance, the determined specific acceleration energy and the vehicle mass as shown in the **FIG.3C**.

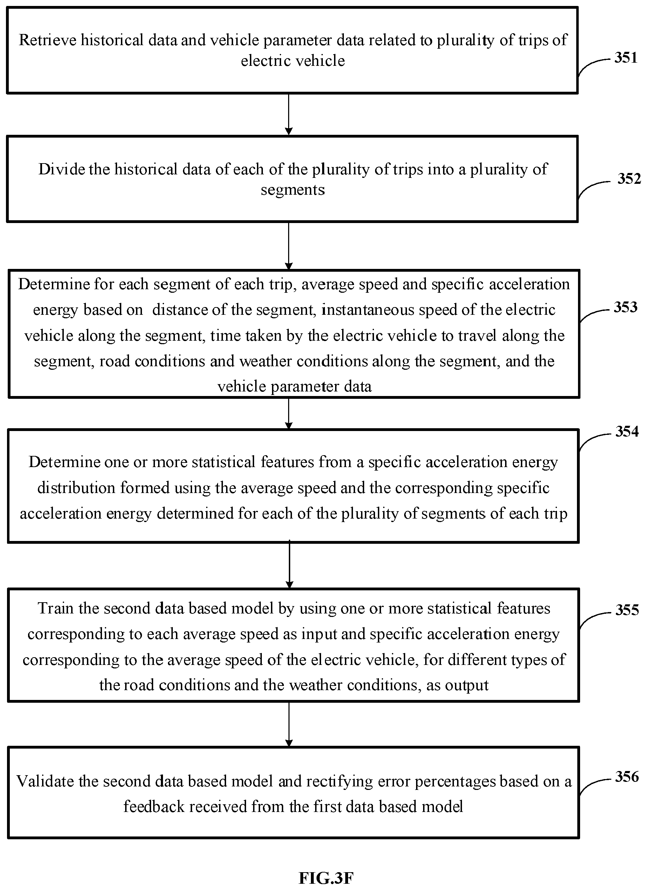

**FIG.3F** shows a flowchart to illustrate training procedure of the second data based model to determine the step acceleration energy.

At **block 351**, during the training phase, the energy consumption predicting module **333** may retrieve historical data and the vehicle parameter data related to each of a plurality of trips of the electric vehicle. In some embodiments, the historical data may include, but not limited to, different road conditions and weather conditions during the trip, speed of the electric vehicle under the different road conditions and weather conditions, and time taken by the electric vehicle to travel along the different road conditions and weather conditions. In some embodiments, the vehicle parameter data may include values associated with vehicle parameters such as vehicle mass, cross-sectional area, drag co-efficient, rolling friction co-efficient, percentage of energy regenerated while decelerating, energy source rated capacity (i.e. battery rated capacity) and the like.

At **block 352**, during the training phase, the energy consumption predicting module **333** may divide the historical data of each of the plurality of trips into a plurality of segments to perform computation based on a moving window segmentation technique. In some embodiments, each "Step" may be divided into multiple segments of an equal length or a variable length.

At **block 353**, during the training phase, the energy consumption predicting module **333** may determine for each segment of each trip, average speed and specific acceleration energy based on distance of the segment, instantaneous speed of the electric vehicle along the segment, time taken by the electric vehicle to travel along the segment, the road conditions along the segment, the weather conditions along the segment, and the vehicle parameter data. The average speed and the specific acceleration energy corresponding to the average speed, determined for each segment of each trip may be stored in the memory **209** or in a database associated with the range predicting system **203**. In some embodiments, the average speed of the electric vehicle for each segment (also referred as segment average speed) may be determined using the **Equation 1** explained above in the present disclosure. Similarly, the specific acceleration energy of the electric vehicle for each segment (also referred as segment specific acceleration energy) may be determined using the **Equation 2** explained above in the present disclosure.

At **block 354**, during the training phase, the energy consumption predicting module **333** may determine one or more statistical features from a specific acceleration energy distribution. In some embodiments, the specific acceleration energy distribution may be formed using the average speed and the corresponding specific acceleration energy determined for each of the plurality of segments of each trip as specified in the **block 353**. In some embodiment, the one or more statistical features may include, but not limited to, mean, median, mode, maximum and minimum acceleration energy. The one or more statistical features may be determined using any standard formulas known to the person skilled in the art. **FIG.3G(1)** shows an exemplary graph plotted for specific acceleration energy (along y-axis in Joules) vs average speed (along x-axis in Km/hr), and **FIG.3G(2)** shows an exemplary specific acceleration energy distribution, wherein X-axis shows the specific acceleration energy in Joules and Y-axis shows number of occurrences of a certain specific acceleration energy for a given average speed of 40 Km/hr. In an exemplary scenario, consider the one or more statistical features i.e. mean, median, mode, minimum and maximum specific acceleration energy are determined using the exemplary specific acceleration energy distribution as shown in the **FIG.3G(2)**. Consider the values of the one or more statistical features based on the determination are as follows: Mean = 108.6, Median = 101.2, Mode = 119, Min = -20 and Max = 320. Therefore, the energy consumption predicting module **333** may determine the specific acceleration energy corresponding to the average speed of 40 Km/hr using the below **Equation 3**. In the **Equation 3**, "a", "b", "c", "d" and "e" are coefficients, that may be determined using linear regression techniques known to a person skilled in the art. Exemplary coefficient values usable in **Equation 3** may be as follows: a=0.45, b=0.1, c=0.15, d=0.15, and e=0.15.

$$\text{Specific Acceleration Energy @ 40kmph} = a*(Mean) + b*(Median) + c*(Mode) + d*(Min) + e*(Max) \text{ ------------- } \textbf{Equation 3}$$

At **block 355**, during the training phase, the energy consumption predicting module **333** may train the second data based model by using the one or more statistical features corresponding to each average speed of the electric vehicle as input and the specific acceleration energy corresponding to the average speed of the electric vehicle, for different types of the road conditions and the weather conditions, as output. In some embodiments, the input and output of the second data based model thus used for training may be represented in the form a look-up table.

At **block 356**, during the training phase, the energy consumption predicting module **333** may validate the second data based model and rectify error percentages based on a feedback received from the second data based model. In some embodiments, the validation is meant to decrease the error percentages over a period of time during the training phase.

Therefore, in real-time, when the energy consumption predicting module **333** uses the second data based model to determine step acceleration energy, the energy consumption predicting module **333** may initially determine the specific acceleration energy by providing the step distance, a step duration predicted relative to the route related data for the step distance, the route related data and the weather related data for the step distance, as input to the second data based model as shown in the **FIG.3C**. Since, the second data based model is pre-trained, the second data based model provides the specific acceleration energy suitable for the input, as output. In some embodiments, when the second data based model is implemented in the form of a look-up table, then the output is provided based on the look-up table generated during the training phase. Thereafter, the energy consumption predicting module **333** may determine the step acceleration energy by combining the step distance, the determined specific acceleration energy and the vehicle mass as shown in the **FIG.3C**.

**FIG.3H** shows a flowchart to illustrates training procedure of the third data based model to determine the step acceleration energy.

In some embodiments, the third data based model may include a plurality of sub-third data based models. The plurality of sub-third data based models may include, but not limited to, a low sub-third data based model, a medium sub-third data based model and a high sub-third data based model.

At **block 361**, during the training phase, the energy consumption predicting module **333** may retrieve historical data and the vehicle parameter data related to each of a plurality of trips of the electric vehicle. In some embodiments, the historical data may include, but not limited to, different road conditions, weather conditions and on-road traffic conditions during the trip, speed of the electric vehicle under the different road conditions, the on-road traffic conditions and the weather conditions, and time taken by the electric vehicle to travel along the different road conditions, the on-road traffic conditions and the weather conditions. In some embodiments, the vehicle parameter data may include values associated with vehicle parameters such as vehicle mass, cross-sectional area, drag co-efficient, rolling friction co-efficient, percentage of energy regenerated while decelerating, energy source rated capacity (i.e. battery rated capacity) and the like.

At **block 362**, during the training phase, the energy consumption predicting module **333** may divide the historical data of each of the plurality of trips into a plurality of segments to perform computation based on a moving window segmentation technique. In some embodiments, each "Step" may be divided into multiple segments of an equal length or a variable length.

At **block 363**, during the training phase, the energy consumption predicting module **333** may determine for each segment of each trip, average speed and specific acceleration energy based on distance of the segment, instantaneous speed of the electric vehicle along the segment, time taken by the electric vehicle to travel along the segment, the road conditions, on-road traffic conditions and the weather conditions along the segment, and the vehicle parameter data. The average speed and the specific acceleration energy corresponding to the average speed, determined for each segment of each trip may be stored in the memory **209** or in a database associated with the range predicting system **203**. In some embodiments, the average speed of the electric vehicle for each segment (also referred as segment average speed) may be determined using the **Equation 1** explained above in the present disclosure. Similarly, the specific acceleration energy of the electric vehicle for each segment (also referred as segment specific acceleration energy) may be determined using the **Equation 2** explained above in the present disclosure.

At **block 364**, during the training phase, the energy consumption predicting module **333** may segregate the specific acceleration energy corresponding to the average speed of each segment into one of a low acceleration energy category, a medium acceleration energy category and a high acceleration energy category based on thresholds corresponding to the low acceleration energy category and the medium acceleration energy category. In some embodiments, the energy consumption predicting module **333** may determine the thresholds corresponding to the low acceleration energy category and the medium acceleration energy category based on the one or more statistical features. As an example, the one or more statistical features used for determining the thresholds may be minimum and maximum acceleration energy. The energy consumption predicting module **333** may determine the one or more statistical features from a specific acceleration energy distribution formed using the average speed and the corresponding specific acceleration energy determined for each of the plurality of segments of each trip. Upon determining the one or more statistical features, the energy consumption predicting module **333** may determine the thresholds corresponding to the low acceleration energy category and the medium acceleration energy category.

In some embodiments, the threshold corresponding to the low acceleration energy category may be determined using the below **Equation 5**.

$$\text{Low Threshold} = \min + (\max\text{-}\min)/3 \text{ -------- } \textbf{Equation 5}$$

In the above **Equation 5**,

Min refers to minimum acceleration energy;
Max refers to maximum acceleration energy; and
Low threshold refers to the threshold corresponding to low acceleration category.

In some embodiments, the threshold corresponding to the medium acceleration energy category may be determined using the below **Equation 6**.

$$\text{Medium Threshold} = \min + (\max\text{-}\min)*2/3 \text{ -------- } \textbf{Equation 6}$$

In the above **Equation 6**,

Min refers to minimum acceleration energy;
Max refers to maximum acceleration energy; and
Medium threshold refers to the threshold corresponding to medium acceleration category.

In some embodiments, when the specific acceleration energy is lesser than the low threshold, then the energy consumption predicting module **333** may segregate the specific acceleration energy into a low acceleration energy category. In some embodiments, when the specific acceleration energy is greater than the low threshold, but lesser than the medium threshold, then the energy consumption predicting module **333** may segregate the specific acceleration energy into a medium acceleration energy category. In some embodiments, when the specific acceleration energy is greater than the medium threshold, then the energy consumption predicting module **333** may segregate the specific acceleration energy into a high acceleration energy category.

As an example, consider the exemplary specific acceleration energy distribution as shown in the **FIG.3G (2)** for a given average speed of 40 Km/hr. As per the exemplary specific acceleration energy distribution, the minimum acceleration energy (min) is -20 J and the maximum acceleration energy (max) is 320 J. Therefore, by substituting the values of min and max in **Equation 5** and **Equation 6**,

the low threshold is: -20 + (320- (-20))/3 = 93.3
the medium threshold is: -20 + (320 - (-20))*2/3 = 206.6

Consider an exemplary specific acceleration energy 230 J. Since, 230 J is greater than the medium threshold, it is categorized into high acceleration energy category. Similarly, consider an exemplary specific acceleration energy 175 J. Since, 175 J is greater than the low threshold but lesser than the medium threshold, it is categorized into medium acceleration energy category. Similarly, consider an exemplary specific acceleration energy 45 J. Since, 45 J is lesser than the low threshold, it is categorized into low acceleration energy category.

At **block 365**, during the training phase, the energy consumption predicting module **333** may train the low sub-third data based model, the medium sub-third data based model and the high sub-third data based model, using the average speed of the electric vehicle and its powers as input and the corresponding specific acceleration energies belonging to the low acceleration energy category, the medium acceleration energy category and the high acceleration energy category, for different types of the road conditions, the on-road traffic conditions and the weather conditions, as output. In some embodiments, the input and output of the third data based model i.e. the low sub-third data based model, the medium sub-third data based model and the high sub-third data based model, thus used for training may be represented in the form a look-up table.

At **block 366**, during the training phase, the energy consumption predicting module **333** may validate the low sub-third data based model, the medium sub-third data based model and the high sub-third data based model, and rectifies error percentages based on a feedback received from the low sub-third data based model, the medium sub-third data based model and the high sub-third data based model. In some embodiments, the validation is meant to decrease the error percentages over a period of time during the training phase.

Therefore, in real-time, when the energy consumption predicting module **333** uses the third data based model to determine step acceleration energy, the energy consumption predicting module **333** may initially determine the specific acceleration energy belonging to the low acceleration energy category, a specific acceleration energy belonging to the medium acceleration energy category, and a specific acceleration energy belonging to the high acceleration energy category, based on a step distance and a step duration, and the route related data and the weather related data for the step distance and the step duration. In some embodiments, as shown in the **FIG.3G**, the energy consumption predicting module **333** may determine the low acceleration energy using the low sub-third data based model, the medium acceleration energy using the medium sub-third data based model and the high acceleration energy using the high sub-third data based model. Thereafter, the energy consumption predicting module **333** may determine a probability of occurrence of the specific acceleration energy belonging to the low acceleration energy category ($P_L$), a probability of occurrence of the specific acceleration energy belonging to the medium acceleration energy category ($P_M$), and a probability of occurrence of the specific acceleration energy belonging to the high acceleration energy category ($P_H$), based on the route related data, on-road traffic conditions and the weather related data, using a probability data based model.

In some embodiments, the probability of the specific acceleration energy belonging to the low acceleration energy category ($P_L$) may be determined using the below **Equation 7**.

$$P_L = N_L/(N_L + N_M + N_H) \text{ -------- } \textbf{Equation 7}$$

In the above **Equation 7**,

$P_L$ refers to probability of the specific acceleration energy belonging to the low acceleration energy category;
NL refers to number of occurrences of the specific acceleration energy belonging to the low acceleration energy category;
NM refers to number of occurrences of the specific acceleration energy belonging to the medium acceleration energy category; and
NH refers to number of occurrences of the specific acceleration energy belonging to the high acceleration energy category.

In some embodiments, the probability of the specific acceleration energy belonging to the medium acceleration energy category ($P_M$) may be determined using the below **Equation 8**.

$$P_M = N_M/(N_L + N_M + N_H) \text{ -------- } \textbf{Equation 8}$$

In the above **Equation 8**,

$P_M$ refers to probability of the specific acceleration energy belonging to the medium acceleration energy category;
NL refers to number of occurrences of the specific acceleration energy belonging to the low acceleration energy category;
NM refers to number of occurrences of the specific acceleration energy belonging to the medium acceleration energy category; and
$N_H$ refers to number of occurrences of the specific acceleration energy belonging to the high acceleration energy category.

In some embodiments, the probability of the specific acceleration energy belonging to the high acceleration energy category ($P_H$) may be determined using the below **Equation 9**.

$$P_H = N_H/(N_L + N_M + N_H) \text{ -------- } \textbf{Equation 9}$$

In the above **Equation 9**,

$P_H$ refers to probability of the specific acceleration energy belonging to the high acceleration energy category;
$N_L$ refers to number of occurrences of the specific acceleration energy belonging to the low acceleration energy category;
NM refers to number of occurrences of the specific acceleration energy belonging to the medium acceleration energy category; and

NH refers to number of occurrences of the specific acceleration energy belonging to the high acceleration energy category.

Thereafter, the energy consumption predicting module **333** may generate a first result by correlating the specific acceleration energy belonging to the low acceleration energy category and the probability of occurrence of the specific acceleration energy belonging to the low acceleration energy category as shown in the **FIG.3I.** Similarly, the energy consumption predicting module **333** may generate a second result by correlating the specific acceleration energy belonging to the medium acceleration energy category and the probability of occurrence of the specific acceleration energy belonging to the medium acceleration energy category as shown in the **FIG.3I.** Similarly, the energy consumption predicting module **333** may generate a third result by correlating the specific acceleration energy belonging to the high acceleration energy category and the probability of occurrence of the specific acceleration energy belonging to the high acceleration energy category as shown in the **FIG.3I.** In some embodiments, correlating in the context of generating the first result, the second result and the second result as mentioned above may mean a product or a mathematical operation of multiplication. Finally, the energy consumption predicting module **333** may determine the step acceleration energy for the step distance based on a combination of the first result, the second result and the third result, vehicle mass and the step distance, as shown in the **FIG.3I.** In some embodiments, combining the first result, the second result and the third result may mean sum of the first result, the second result and the third result.

In some embodiments, the probability data based model used for determining the $P_L$, $P_M$, and $P_H$, may be pre-trained. **FIG.3J** shows a flowchart illustrating the training procedure of the probability data based model.

At **block 371**, during the training phase, the energy consumption predicting module **333** may retrieve historical data and vehicle parameter data related to each of a plurality of trips of the electric vehicle as training input. In some embodiments, the historical data or in other words, the training input may include, but not limited to, data measured from the vehicle and electronic devices communicatively connected to the vehicle during the plurality of trips, different road conditions, weather conditions during the trip, on-road traffic conditions during the trip, speed of the electric vehicle under the different road conditions, the on-road traffic conditions and weather conditions, and time taken by the electric vehicle to travel along the different road conditions, the on-road traffic conditions and weather conditions.

At **block 372**, during the training phase, the energy consumption predicting module **333** may divide the historical data of each of the plurality of trips into a plurality of segments to perform computation based on a moving window segmentation technique. In some embodiments, each "Step" may be divided into multiple segments of an equal length or a variable length.

At **block 373**, during the training phase, the energy consumption predicting module **333** may determine for each of the plurality of segments of each trip, average speed and specific acceleration energy based on distance of the segment, instantaneous speed of the electric vehicle along the segment, time taken by the electric vehicle to travel along the segment, the road conditions, on-road traffic conditions and the weather conditions along the segment, and the vehicle parameter data. The average speed and the specific acceleration energy corresponding to the average speed, determined for each segment of each trip may be stored in the memory **209** or in a database associated with the range predicting system **203**. In some embodiments, the average speed of the electric vehicle for each segment (also referred as segment average speed) may be determined using the **Equation 1** explained above in the present disclosure. Similarly, the specific acceleration energy of the electric vehicle for each segment (also referred as segment specific acceleration energy) may be determined using the **Equation 2** explained above in the present disclosure.

At **block 374**, during the training phase, the energy consumption predicting module **333** may segregate the specific acceleration energy corresponding to each average speed of each segment into one of a low acceleration energy category, a medium acceleration energy category and a high acceleration energy category based on thresholds corresponding to the low acceleration energy category and the medium acceleration energy category. In some embodiments, the energy consumption predicting module **333** may determine the thresholds corresponding to the low acceleration energy category and the medium acceleration energy category based on the one or more statistical features using the **Equations 5** and **6** explained above in the present disclosure. As an example, the one or more statistical features used for determining the thresholds may be minimum and maximum acceleration energy. Further, the energy consumption predicting module **333** may compute the probability of occurrence of the specific acceleration energy belonging to the low acceleration energy category ($P_L$), a probability of occurrence of the specific acceleration energy belonging to the medium acceleration energy category ($P_M$), and a probability of occurrence of the specific acceleration energy belonging to the high acceleration energy category ($P_H$), based on the route related data, on-road traffic conditions and the weather related data, using the **Equations 7**, **8** and **9** above in the present disclosure.

At **block 375**, during the training phase, the energy consumption predicting module **333** may provide the training input as specified in the **block 371** and output as the corresponding probability of occurrence of the specific acceleration energy belonging to the low acceleration energy category ($P_L$), the probability of occurrence of the specific acceleration energy belonging to the medium acceleration energy category ($P_M$), and the probability of occurrence of the specific acceleration energy belonging to the high acceleration energy category ($P_H$), corresponding to each average speed, for different types of the road conditions, the on-road traffic conditions and the weather conditions.

At **block 377**, during the training phase, the energy consumption predicting module **333** may validate the probability data based models and rectifying error percentages based on a feedback received from the probability data based model. In some embodiments, the validation is meant to decrease the error percentages over a period of time during the training phase.

In some embodiments, the table shown in **FIG.3K (1)** indicates an exemplary training input for training the probability data based model. As an example, consider the training input comprises historical data such as step normal average speed, step traffic average speed, step distance, traffic congestion indicator, road geometric features such as intersections, curves etc., road type, average positive elevation change, average negative elevation change and weather condition. The table shown in **FIG.f3K (1)** indicates exemplary values for this training input. Further, the table shown in **FIG.3K (2)** indicates the output $P_L$, $P_M$, and $P_H$ and corresponding exemplary values, for the given training input.

Returning back to **FIG.3A**, upon determining the step acceleration energy using one of the pre-trained first data based model, second data based model or the third data based model as discussed above in the present disclosure, as a next step for predicting the energy consumption along the one or more routes, the energy consumption predicting module **333** may determine a step elevation energy, a step friction energy and a step drag energy using a physics based model. In some other embodiments, three different physics based models may be used to determine the step elevation energy, the step friction energy and the step drag energy. The step elevation energy may be the amount of energy lost by the electric vehicle for every step distance due to elevation changes along the route through which the electric vehicle is navigating. In some embodiments, the step elevation energy may be determined based on, but not limited to, mass of the electric vehicle and acceleration due to gravity received as part of the vehicle parameter data, angle of elevation determined using elevation information received from the route related data, and the step distance and the step duration.

In some embodiments, "Step elevation energy" may be determined using the below **Equation 10**.

$$\text{Elevation Energy} = mg \sin \alpha * D \quad \ldots\ldots\ldots\ldots \textbf{ Equation 10}$$

In the above **Equation 10**,

"$m$" refers to mass of the vehicle, received as part of the vehicle parameter data from the vehicle parameter database. As an example, mass of the vehicle may be 1520 Kg;

"g" refers to acceleration due to gravity, received as part of the vehicle parameter data from the vehicle parameter database;

"D" refers to distance of the step, which is received from the digital maps service; and

"$\alpha$" refers to angle of elevation, which is determined using the route related data from the digital maps service. In some embodiments, "$\alpha$" is determined between two consecutive points on the road such as two GPS locations, using the below **Equation 11,** wherein HI refers to elevation at the first consecutive point and H2 refers to elevation at the second consecutive point, and D is the distance between the two consecutive points which may be determined using a known technique such as Haversine formula.

$$\alpha = \tan\text{-}1(H2\text{-}H1/D) \text{ ------------ } \textbf{Equation 11}$$

Further, the step friction energy may be the amount of energy lost by the electric vehicle for every step distance due to road friction along the route through which the electric vehicle is navigating. In some embodiments, the step friction energy may be determined based on rolling friction co-efficient, mass of the electric vehicle and acceleration due to gravity received as part of the vehicle parameter data, angle of elevation determined using the elevation information received from the route related data, and the step distance. In some embodiments, the "Step friction energy" may be determined using the below **Equation 12**.

$$\text{Friction Energy} = C_r \, mg \cos \alpha * D \text{ ------------- } \textbf{Equation 12}$$

In the above **Equation 12**,

"$Cr$" refers to rolling friction coefficient, received from a vehicle parameter database. As an example, value of the rolling friction coefficient may be 0.012;

"$m$" refers to mass of the vehicle, received as part of the vehicle parameter data from the vehicle parameter database;

"g" refers to acceleration due to gravity, received as part of the vehicle parameter data from the vehicle parameter database;

"$\alpha$" refers to angle of elevation, which is determined using the route related data from the digital maps service; and

"D" refers to distance of the step, which is received from the digital maps service.

Further, the step drag energy may be the amount of energy lost by the electric vehicle for every step distance due to aerodynamic drag along the route through which the electric vehicle is navigating. In some embodiments, the step drag energy may be determined based on air density, aerodynamic drag co-efficient of the electric vehicle and cross-sectional area of the electric vehicle received as part of the vehicle parameter data, wind speed along the route received as part of the weather related data, the step distance and the step duration, an average speed of the electric vehicle for covering the step distance received as part of the route related data, and a compensation factor derived from the historical data of the electric vehicle.

In some embodiments, "Step drag energy" may be determined using the below **Equation 13**.

$$\text{Drag Energy} = \frac{1}{2} \rho_{air} \, C_d \, A (v - v_W)^2 * D * CF$$

------------ **Equation 13**

In the above **Equation 13**,

"$\rho_{air}$" refers to density of air, received as part of the weather related data from the weather service. As an example, density of air may be 1.22 Kg/m$^3$;

"$V_w$" refers to wind speed received as part of the weather related data from the weather service;

"A" refers to area of cross-section of the electric vehicle, received as part of the vehicle parameter data from the vehicle parameter database. As an example, value of the area of cross-section of the electric vehicle may be 2.756 m$^2$;

"$C_d$" refers to aerodynamic drag coefficient of the vehicle, received as part of the vehicle parameter data from the vehicle parameter database. As an example, value of the drag coefficient may be 0.28.

"$v$" refers to average speed, received as part of the route related data from the digital maps service;

"D" refers to distance of the step, which is received from the digital maps service;

"CF" refers to compensation factor derived from the historical data of the electric vehicle.

In some embodiments, drag energy loss computed using average vehicle speed along a step distance D is always less than actual drag energy which is lost. Therefore, the compensation factor is added to improve the accuracy of the determined step drag energy, and is a function of average speed of the electric vehicle along the step. In some embodiments, the compensation factor may be derived from the historical data of the electric vehicle by comparing drag force calculated using instantaneous speeds of the electric vehicle to the drag force calculated using average speeds along a specific distance, as represented in the graph shown in the **FIG.3L**. X-axis of the graph indicates average speed in m/s and Y-axis of the graph indicates compensation factor of the drag force. In some embodiments, the compensation factor may be determined using the below **Equation 14**.

$$\text{CF} = a * \exp(b*x) + c$$ ------------ **Equation 14**

In the above **Equation 14**,

"a", "b", "c" may be coefficient values wherein "a" = 7.3445, "b" = -0.423, "c" = 1.1993;

CF refers to Compensation Factor; and

"x" refers to average speed.

Returning back to **FIG.3A**, upon determining the step elevation energy, the step friction energy and the step drag energy using the physics based model as discussed above in the present disclosure, as a next step for predicting the energy consumption along the one or more routes, the energy consumption predicting module **333** may determine a step traction energy consumption. The step traction energy consumption indicates energy predicted to be consumed to propel the electric vehicle for covering the step distance of each of the plurality of steps. In some embodiments, the step traction energy may be determined based on the corresponding step acceleration energy, the step elevation energy, the step friction energy and the step drag energy, using a fourth data based model.

In some embodiments, the fourth data based model is pre-trained. **FIG.3M** shows a flowchart illustrating a training process for training the fourth data based model to determine the step traction energy.

At **block 381**, during the training phase, the energy consumption predicting module **333** may retrieve historical data, vehicle parameter data and route related data related to each of a plurality of trips of the electric vehicle. In some embodiments, the historical data may include, but not limited to, different road conditions and weather conditions during the trip, speed of the electric vehicle under the different road conditions and weather conditions, and time taken by the electric vehicle to travel along the different road conditions and the weather conditions.

At **block 382**, during the training phase, the energy consumption predicting module **333** may determine for each step distance of each trip, the step acceleration energy, the step elevation energy, the step friction energy, and the step drag energy as explained above in the present disclosure, based on the historical data, the vehicle parameter data and the route related data related to each corresponding trip.

At **block 383**, during the training phase, the energy consumption predicting module **333** may train the fourth data based model by generating labelled data. In some embodiments, the generated labelled data may include input as the step acceleration energy, the step elevation energy, the step friction energy, the step drag energy, the step distance and step duration, and output as the step traction energy consumption for the corresponding input. **FIG.3N** shows a table comprising exemplary input values corresponding to acceleration energy, friction energy, elevation energy and drag energy for a given distance and duration, ambient temperature and battery energy consumed for traction or in other words step traction energy, used for training the fourth data based model.

At **block 384**, during the training phase, the energy consumption predicting module **333** may validate the fourth data based model and rectifies error percentages based on a feedback received from the fourth data based model. In some embodiments, the validation is meant to decrease the error percentages over a period of time during the training phase.

In some embodiments, in real-time, when the energy consumption predicting module **333** uses the fourth data based model to determine step traction energy consumption, the energy consumption predicting module **333** may determine the specific acceleration energy, the step elevation energy, the step friction energy, and the step drag energy for a step distance, and provide the same as input to the fourth data based model. Since, the fourth data based model is pre-trained, the fourth data based model provides the step traction energy consumption suitable for the input, as output.

In some embodiments, upon determining the step traction energy consumption, the energy consumption predicting module **333** may determine a route traction energy consumption. The route traction energy consumption may indicate the total energy predicted to be consumed to propel the electric vehicle for covering the total distance of the route from the source location to the destination location. In some embodiments, the energy consumption predicting module **333** may determine the route traction energy consumption by computing a summation of the step traction energy determined for each of the plurality of steps of the route.

In some embodiments, upon determining the route traction energy consumption, the energy consumption predicting module **333** may determine an auxiliary energy consumption along the route for navigation based on predicted power consumption of auxiliary systems configured in the electric vehicle. In some embodiments, the auxiliary energy consumption may indicate energy consumed by one or more auxiliary systems configured in the electric vehicle. As an example, the one or more auxiliary systems may include, but not limited to, Heating Ventilation and Air Conditioning (HVAC) system, lighting system, battery cooling system, audio system, window controlling system, wiper system, Supplemental Restraint System and other auxiliary systems configured in the electric vehicle.

In some embodiments, the processor **205** may determine the Auxiliary energy consumption using the below **Equation 15**.

$$AxE = (P_{AUX} + AC\ Flag * P_{HVAC} + Lighting\ Flag * P_{Lighting}) * T$$

$$\text{---------------Equation 15}$$

In the above **Equation 15**,

AxE refers to Auxiliary energy consumption;
T refers to duration of the trip;
$P_{AUX}$ refers to power of auxiliary systems (e.g.: the battery cooling system);
$P_{HVAC}$ refers to power of the HVAC system which is a function of ambient temperature received as part of the weather related data from the digital weather service;
$P_{Lighting}$ refers to rated power of the vehicle lights;
A/C Flag refers to a binary user input denoting whether the HVAC system in vehicle is in operation or not; and

Lighting flag refers to a binary number determined based on the time of the day (eg: Lighting Flag = 1 from 6PM to 7AM, Lighting Flag = 0 from 8AM to 6 PM). Flag "1" indicates that lights of the electric vehicle are ON, and Flag "0" indicates that lights of the electric vehicle are OFF.

As an example, consider $P_{Lighting}$ = 0.2kW, T = 0.5 hours, Time of the day = 9 AM which means lighting flag = 0 (off condition) and A/C flag = 1 (on condition). The exemplary values of $P_{AUX}$ and $P_{HVAC}$ may be determined as function of ambient temperature using the historical data. **FIG.3O (1)** shows a graph indicating ambient temperature represented along X-axis and cooling system power ($P_{AUX}$) represented along the Y-axis. Similarly, **FIG.3O (2)** shows a graph indicating ambient temperature represented along X-axis and average HVAC power ($P_{HVAC}$) represented along the Y-axis. As an example, consider $P_{AUX}$ = 0.18 and $P_{HVAC}$ = 0.58. By substituting these exemplary values in the above mentioned **Equation 15**, the energy consumption predicting module **333** may determine the auxiliary energy as:

$$AxE = (0.18 + 1*0.58 + 0*0.2) * 0.5 = 0.05 \text{ kWh}$$

In some embodiments, upon determining the auxiliary energy consumption, the energy consumption predicting module **333** may predict the energy consumption along the route by combining the route traction energy consumption and the auxiliary energy consumption determined for the route. In some embodiments, the combining operation used to combine the route traction energy consumption and the auxiliary energy consumption may be a sum/addition operation. **FIG.3Q** shows an exemplary block diagram illustrating an overall method of predicting energy consumption as explained above in the present disclosure, based on exemplary inputs.

In some embodiments, upon determining the predicted energy consumption, the energy parameters determining module **335** may determine the parameter "available energy" of the electric vehicle. The parameter "available energy" may be total energy which is available in the electric vehicle for running the electric vehicle, wherein running the vehicle may include travelling in the electric vehicle and also usage of one or more auxiliary system in the electric vehicle. In some embodiments, the parameter "available energy" may be determined at the beginning stage, before running the electric vehicle. The energy parameters determining module **335** may determine the available energy of the electric vehicle based on a second subset of the plurality of input data **307** and an energy degradation factor determined using an energy source degradation model. In some embodiments, the second subset of the plurality of input data **307** used for determining the available energy comprises an initial energy level (also referred as state of charge) at the source location of the electric vehicle received as part of the data provided by one or more electronic devices communicatively connected with the electric vehicle, and battery capacity received as part of the vehicle parameter data. In some embodiments, the energy parameters determining module **335** may determine the available energy using the below **Equation 16**.

$$AE = \text{Battery Capacity} * \text{SoC} * (1-DF) \text{ ------------- } \textbf{Equation 16}$$

In the above **Equation 16**,

SoC refers to State of Charge of the battery or in other words it is the initial energy level at source location; and

DF refers to degradation factor (state of health of battery) derived from a degradation model which can have any value between 0 and 1 (0 indicates a fully healthy energy source (fully healthy battery) and "1" indicates a completely degraded energy source (completely degraded battery)).

In some embodiments, the energy source degradation model is non-linear in nature and may be derived from the historical data like total energy extracted by the electric vehicle, total distance travelled by the electric vehicle, idle time of the electric vehicle, frequency of high acceleration operation of the electric vehicle, age of energy source of electric vehicle and the like, using a regression model.

As an example,

Age of battery = No. of years the battery is in use.

$$\text{Total Energy Extracted by the electric vehicle} =$$

$$\int Battery\ Voltage * Battery\ Current\ dt\ ; //during\ discharging\ only$$

Total Distance Travelled by the electric vehicle = Odometer Value

$$\text{Idle Time of the electric vehicle} = \text{Age of battery} - \text{total time of battery usage}$$
$$(\text{charging} + \text{discharging})$$

$$\text{Frequency of high acceleration event of the electric vehicle} =$$
$$\text{Count of } (|\frac{d}{dt}(Speed)| > 5 \text{ m/s})$$

In some embodiments, the degradation model may be implemented as a look-up table or a non-linear multivariable function. An exemplary look-up table with exemplary values of the aforementioned parameters of the historical data is as shown in the table of **FIG.3P**.

In some other embodiments, the Degradation Factor (DF) may be determined using the below **Equation 16**.

$$DF = 1\text{-}SoH \text{ ------------ } \textbf{Equation 16}$$

In the above **Equation 16**, SoH refers to State of Health of the battery which is retrieved from a battery management system of the electric vehicle (one of the electronic devices connected to the electric vehicle).

In some embodiments, upon determining the available energy of the electric vehicle, the energy parameters determining module **335** may determine the parameter "consumed energy" of the electric vehicle. The consumed energy of the electric vehicle may indicate currently used up energy i.e. the energy which is consumed by the electric vehicle while navigating along the one or more routes, determined in real-time, is said to be the consumed energy of the electric vehicle. In some embodiments, the energy parameters determining module **335** may determine the consumed energy based on a third subset of the plurality of input data **307**. In some embodiments, the third subset of the plurality of input data **307** may include, but not limited to, an initial energy level at the source location of the electric vehicle, Global Positioning System (GPS) data and user input received as part of data provided by one or more electronic devices communicatively connected with the electric vehicle, the route related data, the vehicle parameter data and the weather related data.

In some embodiments, to determine the consumed energy of the electric vehicle, the energy parameters determining module **335** may initially determine a traction energy consumption between two consecutive points of the route along which the electric vehicle is navigating. As an example, the two consecutive points on the route may be any two consecutive GPS points on that route. Once a trip starts, the Global Positioning System (GPS) or a mobile phone, Tablet phone etc., having a specific application capable of sending the GPS data along with other data, communicatively connected to the electric vehicle, may continuously send the GPS data of the electric vehicle (at a specific sample time, for example: 1 second). The GPS data may include GPS co-ordinates of the vehicle along with timestamp. Exemplary values of the GPS data are as shown below in the format of Timestamp, Latitude and Longitude.

2021-04-20 09:45:24.010, 12.946643, 77.567831

2021-04-21 09:45:25.010, 12.8876161, 77.5843976

2021-04-20 09:45:26.010, 12.8876173, 77.5843891

In some embodiments, the consumed energy of the electric vehicle is determined incrementally whenever a new GPS data of the electric vehicle arrives while traversing a route or at every predefined time interval. For instance, consider the predefined time interval is 1 second. Therefore, consecutive points corresponding to the new GPS data of the electric vehicle is considered every 1 second to determine the consumed energy. Therefore, the consecutive points considered for determining the consumed energy of the electric vehicle may be a current GPS location of the electric vehicle and a previous GPS location of the electric vehicle. In other words, one point of the two consecutive points is a point at which a former consumed energy was determined, and another point is the point at which present consumed energy is to be determined. and then adding it to the previous consumed energy calculated.

In some embodiments, the energy parameters determining module **335** may initially determine the traction energy consumption between the two consecutive points of the route while navigating, based on, but not limited to, distance between the two consecutive points, time taken to cover the distance between the two consecutive points, and speed of the electric vehicle while covering the distance between the two consecutive points derived based on position-time series information received as part of GPS data, elevation information received from the route related data, air density received from weather related data, and mass of the electric vehicle, aerodynamic drag co-efficient of the electric vehicle, cross-sectional area of the electric vehicle, rolling friction co-efficient and acceleration due to gravity received as part of the vehicle parameter data, as shown in the **FIG.3R**. In some embodiments, the energy parameters determining module **335** may use the below **Equation 17** to determine the traction energy consumption between the two consecutive points.

$$
\text{TE} = \begin{cases} \left( m * \dfrac{dv}{dt} + mg \sin\alpha + C_r\, mg \cos\alpha + \dfrac{1}{2}\, \rho_{air}\, C_d\, A(v - v_w)^2 \right) * D;\ \dfrac{dv}{dt} \geq 0, \alpha \geq 0 \\[2em] \left( \beta * \left( m * \dfrac{dv}{dt} + mg \sin\alpha \right) + C_r\, mg \cos\alpha + \dfrac{1}{2}\, \rho_{air}\, C_d\, A(v - v_w)^2 \right) * D;\ \dfrac{dv}{dt} \leq 0, \alpha < 0 \end{cases}
$$

$$\text{----------- } \textbf{Equation 17}$$

In the above **Equation 17**,

"$\rho_{air}$" refers to density of air, received from a vehicle parameter database;
"$A$" refers to area of cross-section of vehicle, received from a vehicle parameter database;
"$C_d$" refers to aerodynamic drag co-efficient of the vehicle, received from a vehicle parameter database;
"$m$" refers to mass of the vehicle, received from a vehicle parameter database;
"$v$" refers to speed derived from position co-ordinates;
"$g$" refers to acceleration due to gravity, received from a vehicle parameter database;
"$\alpha$" refers to angle of elevation, which is received from the digital maps service;
"$V_w$" refers to wind speed received from the digital weather service; and
"$D$" refers to distance derived from position co-ordinates.

Upon determining the traction energy consumption between the two consecutive points, the energy parameters determining module **335** may determine an auxiliary energy consumption between the two consecutive points based on power consumption of the one or more auxiliary systems configured in the electric vehicle. As an example, the one or more auxiliary system configured in the electric vehicle may include, but not limited to, Heating Ventilation and Air Conditioning (HVAC) system, lighting system, battery cooling system, audio system, window controlling system, wiper system, Supplemental Restraint System and other auxiliary systems configured in the electric vehicle. In some embodiments, the energy parameters determining module **335** may determine the auxiliary energy consumption using the **Equation 15** discussed above in the present disclosure.

Thereafter, the energy parameters determining module **335** may determine the consumed energy of the electric vehicle between the two consecutive points based on summation of the traction energy consumption and the auxiliary energy consumption determined for the distance between the two consecutive points. The consumed energy thus determined between the two consecutive points is added to previously determined consumed energy, in order to determine the present consumed energy until the present point in time. For instance, consider a previously determined consumed energy between GPS point 1 and 2 is 35 Joules and the currently determined consumed energy between the next two consecutive points i.e. GPS point 2 and 3 is 30 Joules. Therefore, present consumed energy until the present point in time i.e. until the GPS point 3 from the initial GPS point 1, would be 35 Joules + 30 Joules, which is 65 Joules.

In some embodiments, upon determining the consumed energy, the energy parameters determining module **335** may determine parameter "remaining energy level" of the electric vehicle for navigating along the one or more routes based on the available energy and the consumed energy. In some embodiments, the parameter "remaining energy level" may be determined using the below **Equation 18**.

$$\text{Remaining energy level} = \text{Available energy} - \text{Consumed energy ------- } \textbf{Equation 18}$$

In some embodiments, like consumed energy, remaining energy is also determined in real-time, at every predefined time interval or in other words, between two consecutive points whenever the new GPS data is received from the GPS communicatively connected with the electric vehicle. Therefore, considering the above example of the consumed energy, let the present consumed energy upto the present point in time be 65 Joules and consider the available energy to be 200 J. Therefore, the remaining energy level as per the above **Equation 18** would be 200 - 65 = 135 Joules.

Finally, upon determining the remaining energy level, the range predicting module **337** may determine range of the electric vehicle based on the remaining energy level and the predicted energy consumption along the one or more routes. In some embodiments, when the predicted energy consumption is less than the remaining energy level of the electric vehicle, the range predicting module **337** may determine the range of the electric vehicle based on the predicted energy, the remaining energy level and a distance corresponding to the predicted energy consumption. In some embodiments, the range predicting module **337** may use the below **Equation 19** to determine the range of the electric vehicle when the predicted energy consumption is less than the remaining energy level of the electric vehicle.

$$\text{Range} = \text{Distance}_{P.E} + (A.E - C.E - P.E) * (\text{Distance}_{P.E} / P.E) \text{ ------ } \textbf{Equation 19}$$

In the above **Equation 19**,

P.E refers to Predicted Energy Consumption;
A.E refers to Available Energy;
C.E refers to Consumed Energy; and
$\text{Distance}_{P.E}$ refers to Distance corresponding to the predicted energy consumption.

In some embodiments, when the predicted energy consumption is greater than or equal to the remaining energy level of the electric vehicle, the range predicting module **337** may determine the range of the electric vehicle by searching nearest values to the available energy from the predicted energy consumption array determined for the one or more routes. Thereafter, the range predicting module **337** may determine an intermediate value based on the, the nearest values of the predicted energy consumption to the available energy from the predicted energy consumption array determined for the one or more routes and distances corresponding to the nearest values of the predicted energy consumption. The intermediate value thus determined by the range predicting module **337** may be considered as the range of the electric vehicle. In some embodiments, the nearest values to the available energy from the predicted energy consumption array determined for the one or more routes, may be values of the predicted energy consumption which are lesser than and greater than the available energy, but nearest to the available energy compared to the other predicted energies determined for a particular route.

In some embodiments, the range predicting module **337** may use the below **Equation 20** to determine the range of the electric vehicle when the predicted energy consumption is greater than or equal to the remaining energy level of the electric vehicle.

$$\text{Range} = \text{Distance}_{NPE1} + ((AE - NPE1) / (NPE2 - NPE1)) * \text{Distance}_{NPE2} - \text{Distance}_{NPE1}$$

$$\text{------- } \textbf{Equation 20}$$

In the above **Equation 20**,

NPE1 refers to nearest value to available energy from the predicted energy consumption array determined for the one or more routes, that is lesser than the available energy;
NPE2 refers to nearest value to available energy from the predicted energy consumption array determined for the one or more routes, that is greater than the available energy;
AE refers to Available Energy;
$\text{Distance}_{NPE1}$ refers to Distance corresponding to NPE1 i.e. nearest value to available energy from the predicted energy consumption array determined for the one or more routes, that is lesser than the available energy s; and
$\text{Distance}_{NPE2}$ refers to Distance corresponding to NPE2 i.e. nearest value to available energy from the predicted energy consumption array determined for the one or more routes, that is greater than the available energy.

Consider an exemplary scenario as shown in the **FIG.3S (1)** and **FIG.3S (2)**. **FIG.3S (1)** shows two routes R1 and R2 between the source location "A" and destination location "B". As per the **FIG.3S (1)**, Route R1 is divided into 3 "Steps" i.e. $R1_{1-2}$, $R1_{2-3}$ and $R1_{3-4}$., and Route R2 is divided into 2 "Steps" i.e. $R2_{1-2}$ and $R2_{2-3}$. **FIG.3S (2)** shows a table indicating Route ID, distance and predicted energy consumption for each "Step" of the routes R1 and R2.

As an example, consider the range needs to be determined with respect to Route R2. In this scenario, lets consider Available Energy (AE) to be 8 J for case 1 and Available Energy (AE) to be 12 J for case 2.

Case 1: When predicted energy consumption < Available Energy, the range predicting module **337** may predict the range using the above **Equation 19**. In this case, considering values indicated in the table of **FIG.3S (2)** for Route R2,

P.E = 10 J
A.E = 12 J
C.E = 0 J

$$Distance_{P.E} = 200 \text{ m}$$

By substituting the above values in the **Equation 19**, the range predicting module **337** may determine the range of the electric vehicle to be:

$$Range = 200 + ((12\text{-}0\text{-}10)*200/10) = 240m$$

This means that, with the available energy of 12 J, the range of the electric vehicle is 240m i.e. the electric vehicle is predicted to be capable of traversing a distance of 240m.
Case 2: When predicted energy consumption >= Available Energy, the range predicting module **337** may predict the range using the above **Equation 20**. In this case, considering values indicated in the table of **FIG.3S (2)** for Route R2,

NPE1 = 4 J (this is the nearest value to the available energy 8 J, which is less than the available energy, among the predicted energies mentioned for Route R2 in the table)
NPE2 = 10 J (this is the nearest value to the available energy 8 J, which is greater than the available energy, among the predicted energies mentioned for Route R2 in the table)
A.E = 8 J
C.E = 0 J
$Distance_{NPE1}$ = 100 m (this is distance corresponding to NPE1)
$Distance_{NPE2}$ = 200 m (this is distance corresponding to NPE2)

By substituting the above values in the **Equation 20**, the range predicting module **337** may determine the range of the electric vehicle to be:

$$Range = 100 + ((8\text{-}4)/10\text{-}4)*(200\text{-}100) = 167m$$

This means that, with the available energy of 8 J, the range of the electric vehicle is only 167m i.e. the electric vehicle is predicted to be capable of traversing only a distance of 167 m, while the total distance to be covered to reach destination B is 200 m according to the table in **FIG.3S (2)**.
In some embodiments, based on the range predicted for the electric vehicle with respect to each of the one or more routes, the user may traverse along a suitable route. In some embodiments, the range predicting system **203** may select a route among the one or more routes for navigation based on one or more factors. As an example, the selected route may be one of an optimal route that is predicted to consume minimum energy compared to rest of the one or more routes, a route that comprises sufficient charging stations for charging the electric vehicle, or a route selected by a user for navigation among the one or more routes, whose predicted energy consumption is less than the available energy. In some embodiments, such selection may be performed after determining predicted energy consumption for each of the one or more routes. In some other embodiments, the range of the electric vehicle may be determined corresponding to each of the one or more routes, and then finally, the user or the range predicting system **203** may select the optimal route for the electric vehicle from the source location to the destination location.
In some embodiments, **FIG.3T** shows a bar graph indicating accuracy of the range prediction performed by the range predicting system **203** disclosed in the present disclosure under various road conditions, weather conditions and traffic conditions.
**FIG.4** shows a flowchart illustrating a method of predicting range of an electric vehicle in accordance with some embodiments of the present disclosure.
As illustrated in **FIG.4**, the method **400** includes one or more blocks illustrating a method of method of predicting range of an electric vehicle. The method **400** may be described in the general context of computer executable instructions. Generally, computer executable instructions can include routines, programs, objects, components, data structures, procedures, modules, and functions, which perform functions or implement abstract data types.
The order in which the method **400** is described is not intended to be construed as a limitation, and any number of the described method blocks can be combined in any order to implement the method **400**. Additionally, individual blocks may be deleted from the methods without departing from the spirit and scope of the subject matter described herein. Furthermore, the method **400** can be implemented in any suitable hardware, software, firmware, or combination thereof.

At **block 401**, the method **400** may include, receiving, by a processor **205** of the range predicting system **203**, a plurality of input data **307** from one or more data sources **201** associated with the range predicting system **203**. In some embodiments, the plurality of input data **307** may include, but not limited to, data provided by one or more electronic devices communicatively connected with the electric vehicle, route related data, weather related data and vehicle parameter data.

At **block 403**, the method **400** may include, predicting, by the processor **205**, energy consumption along one or more routes between a source location and a destination location provided for the electric vehicle, based on a first subset of the plurality of input data **307** using at least one of data based models and a physics based model. In some embodiments, the first subset of the plurality of input data **307** may include, but not limited to, the route related data, the vehicle parameter data, the data provided by the one or more electronic devices communicatively connected with the electric vehicle, and the weather related data. In some embodiments, to predict the energy consumption along the one or more routes, the processor **205** may determine step acceleration energy based on a step distance and a step duration predicted relative to route related data for the step distance, weather related data for the step distance, and vehicle parameter data, using a first data based model or a second data based model or a third data based model. Further, the processor **205** may determine a step elevation energy, using the physics based model, based on, mass of the electric vehicle and acceleration due to gravity received as part of the vehicle parameter data, angle of elevation determined using elevation information received from the route related data, and the step distance and the step duration. Upon determining the step elevation energy, the processor **205** may determine a step friction energy, using the physics based model, based on, rolling friction co-efficient received as part of the vehicle parameter data, mass of the electric vehicle and acceleration due to gravity received as part of the vehicle parameter data, angle of elevation determined using the elevation information received from the route related data, and the step distance. Thereafter, the processor **205** may determine a step drag energy, using the physics based model, based on, air density, aerodynamic drag co-efficient of the electric vehicle and cross-sectional area of the electric vehicle received as part of the vehicle parameter data, wind speed along the route received as part of the weather related data, the step distance and the step duration, an average speed of the electric vehicle for covering the step distance, and a compensation factor derived from historical on-road data of the electric vehicle. In some embodiments, the processor 205 may determine the step elevation energy, the step friction energy and the step drag energy simultaneously. Thereafter, the processor **205** may determine a step traction energy consumption indicating energy predicted to be consumed for covering the step distance of each of the plurality of steps based on the corresponding step acceleration energy, the step elevation energy, the step friction energy and the step drag energy, using a fourth data based model. Using the step traction energy thus determined, the processor **205** may determine a route traction energy consumption indicating total energy predicted to be consumed for covering the total distance of the route from the source location to the destination location, based on summation of the step traction energy determined for each of the plurality of steps. Further, the processor **205** may determine an auxiliary energy consumption along the route for navigation based on predicted power consumption of auxiliary systems configured in the electric vehicle. Finally, the processor **205** may predict the energy consumption along the route by combining the route traction energy consumption and the auxiliary energy consumption determined for the route.

At **block 405**, the method **400** may include determining, by the processor **205**, available energy of the electric vehicle based on a second subset of the plurality of input data **307** and an energy degradation factor determined using an energy source degradation model. In some embodiments, the second subset of the plurality of the input data **307** may include, but not limited to, an initial energy level at the source location of the electric vehicle received as part of the data provided by the one or more electronic devices communicatively connected with the electric vehicle, and battery capacity received as part of the vehicle parameter data.

At **block 407**, the method **400** may include determining, by the processor **205**, consumed energy of the electric vehicle while navigating along the one or more routes, based on a third subset of the plurality of input data **307**. In some embodiments, the third subset of the plurality of the input data **307** may include, but not limited to, an initial energy level at the source location of the electric vehicle, Global Positioning System (GPS) data and user input received as part of data provided by the one or more electronic devices communicatively connected with the electric vehicle, the route related data, the vehicle parameter data and the weather related data. In some embodiments, to determine the consumed energy, the processor **205** may determine traction energy consumption between two consecutive points of the route along which the electric vehicle is navigating based on, distance between the two consecutive points, time taken to cover the distance between the two consecutive points, and speed of the electric vehicle while covering the distance between the two consecutive points derived based on position-time series information received as part of GPS data, elevation information received from route related data, air density received from weather related data, and mass of the electric vehicle, aerodynamic drag co-efficient of the electric vehicle, cross-sectional area of the electric vehicle, rolling friction co-efficient and acceleration due to gravity received as part of the vehicle parameter data. Further, the processor **205** may determine auxiliary energy consumption between the two consecutive points based on power consumption of auxiliary systems configured in the electric vehicle. In some embodiments, the processor **205** may determine the traction energy consumption and the auxiliary energy consumption simultaneously. Subsequently, the processor **205** may determine the consumed energy of the electric vehicle between the two consecutive points based on summation of the traction energy consumption and the auxiliary energy consumption determined between the two consecutive points. Thereafter, the processor **205** may add the consumed energy determined between the two consecutive points with the previously determined consumed energy, in order to evaluate total consumed energy upto the present point in time.

At **block 409**, the method **400** may include determining, by the processor **205**, remaining energy level of the electric vehicle for navigating along the one or more routes, based the available energy and the consumed energy.

At **block 411**, the method **400** may include determining, by the processor **205**, range of the electric vehicle based on the remaining energy level and the predicted energy consumption along the one or more routes. Thereafter, selecting a route among the one or more routes, which is best suited for the electric vehicle based on the determined range of the electric vehicle.

**FIG.5** is a block diagram of an exemplary computer system for implementing embodiments consistent with the present disclosure.

In some embodiments, **FIG.5** illustrates a block diagram of an exemplary computer system **500** for implementing embodiments consistent with the present invention. In some embodiments, the computer system **500** can be a range predicting system **203** that is used for predicting range of an electric vehicle. The computer system **500** may include a central processing unit ("CPU" or "processor") **502**. The processor **502** may include the processor **205** of the range predicting system **203** to perform the method disclosed in various embodiments of the present disclosure. The processor **502** may include at least one data processor for executing program components for executing user or system-generated business processes. The processor **502** may include specialized processing units such as integrated system (bus) controllers, memory management control units, floating point units, graphics processing units, digital signal processing units, etc.

The processor **502** may be disposed in communication with input devices **511** and output devices **512** via I/O interface **501**. The I/O interface **501** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE), WiMax, or the like), etc.

Using the I/O interface **501**, computer system **500** may communicate with input devices **511** and output devices **512**.

In some embodiments, the processor **502** may be disposed in communication with a communication network **509** via a network interface **503**. The network interface **503** may communicate with the communication network **509**. The network interface **503** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface **503** and the communication network **509**, the computer system **500** may communicate with one or more data sources **201** ($201_1$ up to $201_n$) for which examples are mentioned in description of **FIG.2A** and a historical database **204**. The communication network **509** can be implemented as one of the different types of networks, such as intranet or Local Area Network (LAN), Closed Area Network (CAN) and such from the electric vehicle. The communication network **509** may either be a dedicated network or a shared network, which represents an association of the different types of networks that use a variety of protocols, for example, Hypertext Transfer Protocol (HTTP), CAN Protocol, Transmission Control Protocol/Internet Protocol (TCP/IP), Wireless Application Protocol (WAP), etc., to communicate with each other. Further, the communication network **509** may include a variety of network devices, including routers, bridges, servers, computing devices, storage devices, etc. In some embodiments, the processor **502** may be disposed in communication with a memory **505** (e.g., RAM, ROM, etc. not shown in **FIG.5)** via a storage interface **504**. The storage interface **504** may connect to memory **505** including, without limitation, memory drives, removable disc drives, etc., employing connection protocols such as Serial Advanced Technology Attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc. The memory **505** may include various data **303** and modules **305** stored in the memory **209** of the range predicting system **203** for performing the method disclosed in the present disclosure.

The memory **505** may store a collection of program or database components, including, without limitation, a user interface **506,** an operating system **507,** a web browser **508** etc. In some embodiments, the computer system **500** may store user/application data, such as the data, variables, records, etc. as described in this invention. Such databases may be implemented as fault-tolerant, relational, scalable, secure databases such as Oracle or Sybase.

The operating system **507** may facilitate resource management and operation of the computer system **500.** Examples of operating systems include, without limitation, APPLE® MACINTOSH® OS X®, UNIX®, UNIX-like system distributions (E.G., BERKELEY SOFTWARE DISTRIBUTION® (BSD), FREEBSD®, NETBSD®, OPENBSD, etc.), LINUX® DISTRIBUTIONS (E.G., RED HAT®, UBUNTU®, KUBUNTU®, etc.), IBM®OS/2®, MICROSOFT® WINDOWS® (XP®, VISTA®/7/8, 10 etc.), APPLE® IOS®, GOOGLE™ ANDROID™, BLACKBERRY® OS, or the like. The User interface **506** may facilitate display, execution, interaction, manipulation, or operation of program components through textual or graphical facilities. For example, user interfaces may provide computer interaction interface elements on a display system operatively connected to the computer system **500,** such as cursors, icons, check boxes, menus, scrollers, windows, widgets, etc. Graphical User Interfaces (GUIs) may be employed, including, without limitation, Apple® Macintosh® operating systems' Aqua®, IBM® OS/2®, Microsoft® Windows® (e.g., Aero, Metro, etc.), web interface libraries (e.g., ActiveX®, Java®, Javascript®, AJAX, HTML, Adobe® Flash®, etc.), or the like.

In some embodiments, the computer system **500** may implement the web browser **508** stored program components. The web browser **508** may be a hypertext viewing application, such as MICROSOFT® INTERNET EXPLORER®, GOOGLE™ CHROME™, MOZILLA® FIREFOX®, APPLE® SAFARI®, etc. Secure web browsing may be provided using Secure Hypertext Transport Protocol (HTTPS), Secure Sockets Layer (SSL), Transport Layer Security (TLS), etc. Web browsers **508** may utilize facilities such as AJAX, DHTML, ADOBE® FLASH®, JAVASCRIPT®, JAVA®, Application Programming Interfaces (APIs), etc. In some embodiments, the computer system **500** may implement a mail server stored program component. The mail server may be an Internet mail server such as Microsoft Exchange, or the like. The mail server may utilize facilities such as Active Server Pages (ASP), ACTIVEX®, ANSI® C++/C#, MICROSOFT®, NET, CGI SCRIPTS, JAVA®, JAVASCRIPT®, PERL®, PHP, PYTHON®, WEBOBJECTS®, etc. The mail server may utilize communication protocols such as Internet Message Access Protocol (IMAP), Messaging Application Programming Interface (MAPI), MICROSOFT® exchange, Post Office Protocol (POP), Simple Mail Transfer Protocol (SMTP), or the like. In some embodiments, the computer system **500** may implement a mail client stored program component. The mail client may be a mail viewing application, such as APPLE® MAIL, MICROSOFT® ENTOURAGE®, MICROSOFT® OUTLOOK®, MOZILLA® THUNDERBIRD®, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

Advantages of the embodiment of the present disclosure are illustrated herein.

The present disclosure enables accurate determination of range level due to consideration of important parameters that affect the energy consumption in an electric vehicle such as energy consumption due to acceleration or deceleration on the route, and aging of battery source. The present disclosure performs such energy consumption prediction based on a hybrid model i.e. a model which is a combination of data based models such as AI models and Physics based models, which in turn ensures accuracy in determination of range level. The physics based model is used for prediction of energy losses due to road friction, elevation and aerodynamic drag. Further, the energy source degradation model in the present disclosure enables including the effect of aging of the battery on range of the vehicle, which in turn enhances the accuracy in determination of range level.

Therefore, the present disclosure alleviates range anxiety among the users of the electric vehicles and thus aids in better planning of trip and avoiding unexpected loss of charge or breakdowns.

A description of an embodiment with several components in communication with each other does not imply that all such components are required. On the contrary a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The specification has described a method and a system for predicting range of the electric vehicle. The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open-ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

**Referral numerals**

| Reference Number | Description |
| --- | --- |
| 200 | Architecture |
| 201 | One or more data sources |
| 203 | Range predicting system |
| 204 | Historical database |
| 205 | Processor |
| 207 | I/O interface |
| 209 | Memory |
| 303 | Data |
| 305 | Modules |
| 307 | Input data / Plurality of input data |
| 309 | Predicted data |
| 311 | Available energy data |
| 313 | Consumed energy data |
| 315 | Remaining energy data |
| 317 | Range data |
| 319 | Other data |
| 331 | Receiving module |
| 333 | Energy consumption predicting module |
| 335 | Energy parameters determining module |
| 337 | Range predicting module |
| 339 | Other modules |
| 500 | Exemplary computer system |
| 501 | I/O Interface of the exemplary computer system |
| 502 | Processor of the exemplary computer system |
| 503 | Network interface |
| 504 | Storage interface |

(continued)

| Reference Number | Description |
| --- | --- |
| 505 | Memory of the exemplary computer system |
| 506 | User interface |
| 507 | Operating system |
| 508 | Web browser |
| 509 | Communication network |
| 511 | Input devices |
| 512 | Output devices |

**Claims**

1. A method of predicting range of an electric vehicle, the method comprising:

   receiving, by a range predicting system, a plurality of input data from one or more data sources;
   predicting, by the range predicting system, energy consumption along one or more routes between a source location and a destination location provided for the electric vehicle, based on a first subset of the plurality of input data using at least one of data based models and a physics based model;
   determining, by the range predicting system, available energy of the electric vehicle based on a second subset of the plurality of input data and an energy degradation factor determined using an energy source degradation model;
   determining, by the range predicting system, consumed energy of the electric vehicle while navigating along the one or more routes, based on a third subset of the plurality of input data;
   determining, by the range predicting system, remaining energy level of the electric vehicle for navigating along the one or more routes based on the available energy and the consumed energy; and
   determining, by the range predicting system, range of the electric vehicle based on the remaining energy level and the predicted energy consumption along the one or more routes.

2. The method as claimed in claim 1, wherein the plurality of input data comprises data provided by one or more electronic devices communicatively connected with the electric vehicle, route related data, weather related data and vehicle parameter data.

3. The method as claimed in claim 1, wherein the first subset of the plurality of input data used for predicting energy consumption comprises route related data, the vehicle parameter data, data provided by one or more electronic devices communicatively connected with the electric vehicle, and weather related data.

4. The method as claimed in claim 1, wherein predicting the energy consumption along the one or more routes between the source location and the destination location based on the first subset of the plurality of input data comprises, performing for each of a plurality of steps of each of the one or more routes:

   determining, by the range predicting system, step acceleration energy based on a step distance and a step duration predicted relative to route related data for the step distance, weather related data for the step distance, and vehicle parameter data, using a first data based model or a second data based model or a third data based model;
   determining, by the range predicting system, a step elevation energy, using the physics based model, based on,

   mass of the electric vehicle and acceleration due to gravity received as part of the vehicle parameter data, angle of elevation determined using elevation information received from the route related data, and the step distance and the step duration;

   determining, by the range predicting system, a step friction energy, using the physics based model, based on,

   rolling friction co-efficient received as part of the vehicle parameter data, mass of the electric vehicle and acceleration due to gravity received as part of the vehicle parameter data,
angle of elevation determined using the elevation information received from the route related data, and
the step distance;

determining, by the range predicting system, a step drag energy, using the physics based model, based on,

air density, aerodynamic drag co-efficient of the electric vehicle and cross-sectional area of the electric vehicle received as part of the vehicle parameter data,
wind speed along the route received as part of the weather related data, the step distance and the step duration,
an average speed of the electric vehicle for covering the step distance, and
a compensation factor derived from historical data of the electric vehicle;

determining, by the range predicting system, a step traction energy consumption indicating energy predicted to be consumed for covering the step distance of each of the plurality of steps based on the corresponding step acceleration energy, the step elevation energy, the step friction energy and the step drag energy, using a fourth data based model;
determining, by the range predicting system, a route traction energy consumption indicating total energy predicted to be consumed for covering the total distance of the route from the source location to the destination location, based on summation of the step traction energy determined for each of the plurality of steps;
determining, by the range predicting system, an auxiliary energy consumption along the route for navigation based on predicted power consumption of auxiliary systems configured in the electric vehicle; and
predicting, by the range predicting system, the energy consumption along the route by combining the route traction energy consumption and the auxiliary energy consumption determined for the route.

5. The method as claimed in claim 4, wherein the first data based model used for determining the step acceleration energy is pre-trained, wherein training the first data based model comprises:

retrieving, by the range predicting system, historical data and vehicle parameter data related to each of a plurality of trips of the electric vehicle, wherein the historical data comprises at least one of different road conditions and weather conditions during the trip, speed of the electric vehicle under the different road conditions and weather conditions, and time taken by the electric vehicle to travel along the different road conditions and weather conditions;
dividing, by the range predicting system, the historical data of each of the plurality of trips into a plurality of segments;
determining, by the range predicting system, for each segment of each trip, average speed and specific acceleration energy based on distance of the segment, instantaneous speed of the electric vehicle along the segment, time taken by the electric vehicle to travel along the segment, road conditions along the segment and weather conditions along the segment, and the vehicle parameter data;
training, by the range predicting system, the first data based model by generating labelled data comprising input as the average speed and powers of the average speed of the electric vehicle, and output as the specific acceleration energy corresponding to the average speed of the electric vehicle, for different types of the road conditions and the weather conditions; and
validating, by the range predicting system, the first data based model and rectifying error percentages based on a feedback received from the first data based model.

6. The method as claimed in claim 4, wherein the second data based model used for determining the step acceleration energy is pre-trained, wherein training the second data based model comprises:

retrieving, by the range predicting system, historical data and vehicle parameter data related to each of a plurality of trips of the electric vehicle, wherein the historical data comprises at least one of different road conditions and weather conditions during the trip, speed of the electric vehicle under the different road conditions and weather conditions, and time taken by the electric vehicle to travel along the different road conditions and weather conditions;
dividing, by the range predicting system, the historical data of each of the plurality of trips into a plurality of segments;
determining, by the range predicting system, for each of the plurality of segments of each trip, an average speed and a specific acceleration energy based on distance of the segment, instantaneous speed of the electric vehicle along the segment, time taken by the electric vehicle to travel along the segment, road conditions along the segment and weather conditions along the segment, and the vehicle parameter data;

determining one or more statistical features from a specific acceleration energy distribution formed using the average speed and the corresponding specific acceleration energy determined for each of the plurality of segments of each trip, wherein the one or more statistical features comprises at least one of mean, median, mode, maximum and minimum acceleration energy;

training, by the range predicting system, the second data based model by using the one or more statistical features corresponding to each average speed of the electric vehicle as input and the specific acceleration energy corresponding to the average speed of the electric vehicle, for different types of the road conditions and the weather conditions, as output; and

validating, by the range predicting system, the second data based model and rectifying error percentages based on a feedback received from the second data based model.

7. The method as claimed in claim 4, wherein the third data based model used for determining the step acceleration energy is pre-trained, wherein the third data based model further comprises a plurality of sub-third data based models, wherein the plurality of sub-third data based models are a low sub-third data based model, a medium sub-third data based model and a high sub-third data based model, wherein training the third data based model comprises:

retrieving, by the range predicting system, historical data and vehicle parameter data related to each of a plurality of trips of the electric vehicle, wherein the historical data comprises at least one of different road conditions, weather conditions and on-road traffic conditions during the trip, speed of the electric vehicle under the different road conditions, the on-road traffic conditions and weather conditions, and time taken by the electric vehicle to travel along the different road conditions, the on-road traffic conditions and weather conditions;

dividing, by the range predicting system, the historical data of each of the plurality of trips into a plurality of segments;

determining, by the range predicting system, for each of the plurality of segments of each trip, an average speed and a specific acceleration energy based on distance of the segment, instantaneous speed of the electric vehicle along the segment, time taken by the electric vehicle to travel along the segment, road conditions along the segment and weather conditions along the segment, and the vehicle parameter data;

segregating, by the range predicting system, the specific acceleration energy corresponding to average speed of each segment into one of a low acceleration energy category, a medium acceleration energy category and a high acceleration energy category based on thresholds corresponding to the low acceleration energy category and the medium acceleration energy category;

training based on the segregation, by the range predicting system, the low sub-third data based model, the medium sub-third data based model and the high sub-third data based model, using the average speed of the electric vehicle and powers of the average speed as input and the corresponding specific acceleration energies belonging to the low acceleration energy category, the medium acceleration energy category and the high acceleration energy category, for different types of the road conditions, the on-road traffic conditions and the weather conditions, as output; and

validating, by the range predicting system, the low sub-third data based model, the medium sub-third data based model and the high sub-third data based model and rectifying error percentages based on a feedback received from the low sub-third data based model, the medium sub-third data based model and the high sub-third data based model.

8. The method as claimed in claim 7, wherein the thresholds corresponding to the low acceleration energy category and the medium acceleration energy category are determined by the range predicting system, wherein determining the thresholds comprises performing the steps of:

determining the one or more statistical features from a specific acceleration energy distribution formed using the average speed and the corresponding specific acceleration energy determined for each of the plurality of segments of each trip, wherein the one or more statistical features comprises maximum and minimum acceleration energy; and

determining the thresholds corresponding to the low acceleration energy category and the medium acceleration energy category based on the maximum and minimum acceleration energy.

9. The method as claimed in claim 7, wherein determining, in real-time, the step acceleration energy using the third data based model comprises performing the steps of:

determining, by the range predicting system, a specific acceleration energy belonging to the low acceleration energy category, a specific acceleration energy belonging to the medium acceleration energy category, and a specific acceleration energy belonging to the high acceleration energy category, based on a step distance and a step duration, and route related data and weather related data for the step distance and the step duration;

determining, by the range predicting system, a probability of occurrence of the specific acceleration energy belonging to the low acceleration energy category ($P_L$), a probability of occurrence of the specific acceleration energy belonging to the medium acceleration energy category ($P_M$), and a probability of occurrence of the specific acceleration energy belonging to the high acceleration energy category ($P_H$), based on the route related data, on-road traffic conditions and the weather related data, using a probability data based model;

generating, by the range predicting system,

a first result by correlating the specific acceleration energy belonging to the low acceleration energy category and the probability of occurrence of the specific acceleration energy belonging to the low acceleration energy category;

a second result by correlating the specific acceleration energy belonging to the medium acceleration energy category and the probability of occurrence of the specific acceleration energy belonging to the medium acceleration energy category; and

a third result by correlating the specific acceleration energy belonging to the high acceleration energy category and the probability of occurrence of the specific acceleration energy belonging to the high acceleration energy category; and

determining, by the range predicting system, the step acceleration energy for the step distance based on a combination of the first result, the second result and the third result, vehicle mass and the step distance.

10. The method as claimed in claim 9, wherein the probability data based model is pre-trained, wherein training the probability data based model comprises performing the steps of:

retrieving, by the range predicting system, historical data and vehicle parameter data related to each of a plurality of trips of the electric vehicle as training input, wherein the historical data comprises at least one of different road conditions, weather conditions during the trip, on-road traffic conditions during the trip, speed of the electric vehicle under the different road conditions, the on-road traffic conditions and weather conditions, and time taken by the electric vehicle to travel along the different road conditions, the on-road traffic conditions and weather conditions;

dividing, by the range predicting system, the historical data of each of the plurality of trips into a plurality of segments;

determining, by the range predicting system, for each of the plurality of segments of each trip, an average speed and a specific acceleration energy based on distance of the segment, instantaneous speed of the electric vehicle along the segment, time taken by the electric vehicle to travel along the segment, road conditions, on-road traffic conditions and weather conditions along the segment, and the vehicle parameter data;

segregating, by the range predicting system, the specific acceleration energy corresponding to each average speed into one of the low acceleration energy category, the medium acceleration energy category and the high acceleration energy category based on thresholds corresponding to the low acceleration energy category and the medium acceleration energy category;

computing, by the range predicting system, the probability of occurrence of the specific acceleration energy belonging to the low acceleration energy category ($P_L$), the probability of occurrence of the specific acceleration energy belonging to the medium acceleration energy category ($P_M$), and the probability of occurrence of the specific acceleration energy belonging to the high acceleration energy category ($P_H$), using a segregated acceleration energy distribution which is generated based on a result of the segregation;

training, by the range predicting system, the probability data based model by providing the training input and output as the corresponding probability of occurrence of the specific acceleration energy belonging to the low acceleration energy category ($P_L$), the probability of occurrence of the specific acceleration energy belonging to the medium acceleration energy category ($P_M$), and the probability of occurrence of the specific acceleration energy belonging to the high acceleration energy category ($P_H$), corresponding to each average speed, for different types of the road conditions, the on-road traffic conditions and the weather conditions; and

validating, by the range predicting system, the probability data based model and rectifying error percentages based on a feedback received from the probability data based model.

11. The method as claimed in claim 4, wherein the fourth data based model used for determining the step traction energy consumption is pre-trained, wherein training the fourth data based model comprises:

retrieving, by the range predicting system, historical data, vehicle parameter data and route related data related to each of a plurality of trips of the electric vehicle, wherein the historical data comprises at least one of different road conditions and weather conditions during the trip, speed of the electric vehicle under the different road conditions and weather conditions, time taken by the electric vehicle to travel along the different road conditions and weather conditions;

determining, by the range predicting system, for each step distance of each trip, step acceleration energy, step elevation energy, step friction energy, and step drag energy based on the historical data, the vehicle parameter data and the route related data related to each corresponding trip;

training, by the range predicting system, the fourth data based model by generating labelled data comprising input as the step acceleration energy, the step elevation energy, the step friction energy, the step drag energy, the step distance, step duration and ambient temperature, and output as step traction energy consumption for the corresponding input; and

validating, by the range predicting system, the fourth data based model and rectifying error percentages based on a feedback received from the fourth data based model.

12. The method as claimed in claim 1, wherein the second subset of the plurality of input data used for determining the available energy comprises an initial energy level at the source location of the electric vehicle received as part of the data provided by one or more electronic devices configured in the electric vehicle, and battery capacity received as part of the vehicle parameter data.

13. The method as claimed in claim 1, wherein the third subset of the plurality of input data used for determining the consumed energy comprises an initial energy level at the source location of the electric vehicle, Global Positioning System (GPS) data and user input received as part of data provided by one or more electronic devices communicatively connected with the electric vehicle, route related data, vehicle parameter data and weather related data.

14. The method as claimed in claim 1, wherein determining the consumed energy of the electric vehicle while navigating along the one or more routes based on the third subset of the plurality of input data, comprises:

determining, by the range predicting system, traction energy consumption between two consecutive points of the route along which the electric vehicle is navigating based on,

distance between the two consecutive points, time taken to cover the distance between the two consecutive points, and speed of the electric vehicle while covering the distance between the two consecutive points derived based on position-time series information received as part of GPS data,
elevation information received from route related data,
air density received from weather related data, and
mass of the electric vehicle, aerodynamic drag co-efficient of the electric vehicle, cross-sectional area of the electric vehicle, rolling friction co-efficient and acceleration due to gravity received as part of the vehicle parameter data determining, by the range predicting system, auxiliary energy consumption between the two consecutive points based on power consumption of auxiliary systems configured in the electric vehicle; and

determining, by the range predicting system, the consumed energy of the electric vehicle between the two consecutive points based on summation of the traction energy consumption and the auxiliary energy consumption determined between the two consecutive points.

15. The method as claimed in claim 14, wherein one point of the two consecutive points is a point at which a former consumed energy was determined, and another point is the point at which present consumed energy is to be determined.

16. The method as claimed in claim 14, wherein the auxiliary systems configured in the electric vehicle comprises at least one of Heating Ventilation and Air Conditioning (HVAC) system, lighting system, battery cooling system, audio system, window controlling system, wiper system, Supplemental Restraint System and other auxiliary systems configured in the electric vehicle.

17. The method as claimed in claim 1, wherein the consumed energy and the corresponding remaining energy level of the electric vehicle are determined at each predefined time interval.

18. The method as claimed in claim 1 further comprises selecting, by the range predicting system, a route among the one or more routes for navigation, wherein the selected route is one of, an optimal route that is predicted to consume minimum energy compared to rest of the one or more routes, a route that comprises sufficient charging stations for charging the electric vehicle, or a route selected by a user for navigation among the one or more routes, whose predicted energy consumption is less than the available energy.

19. The method as claimed in claim 1, wherein the energy source degradation model is trained to determine the energy degradation factor based on historical data related to the electric vehicle comprising at least one of total energy extracted by the electric vehicle, total distance travelled by the electric vehicle, idle time of the electric vehicle, age of energy source of the electric vehicle, and frequency of high acceleration operations of the electric vehicle.

20. The method as claimed in claim 19, wherein the energy degradation factor is a value ranging between 0 and 1, wherein "1" indicates a completely degraded energy source and "0" indicates a completely healthy energy source.

21. The method as claimed in claim 1, wherein the range of the electric vehicle, when the predicted energy consumption is greater than or equal to the remaining energy level of the electric vehicle, is determined by:

searching nearest values to the available energy from the predicted energy consumption array determined for the one or more routes; and
determining an intermediate value based on the nearest values of the predicted energy consumption to the available energy and distances corresponding to the nearest values of the predicted energy consumption, wherein the determined intermediate value is the range of the electric vehicle.

22. The method as claimed in claim 1, wherein the range of the electric vehicle, when the predicted energy consumption is less than the remaining energy level of the electric vehicle, is determined based on the predicted energy, the remaining energy level and a distance corresponding to the predicted energy consumption.

23. A range predicting system for predicting range of an electric vehicle, the range predicting system comprising:

a processor; and
a memory communicatively coupled to the processor, wherein the memory stores the processor-executable instructions, which, on execution, causes the processor to:

receive a plurality of input data from one or more data sources;
predict energy consumption along one or more routes between a source location and a destination location provided for the electric vehicle, based on a first subset of the plurality of input data using at least one of data based models and a physics based model;
determine available energy of the electric vehicle based on a second subset of the plurality of input data and an energy degradation factor determined using an energy source degradation model;
determine consumed energy of the electric vehicle while navigating along the one or more routes, based on a third subset of the plurality of input data;
determine remaining energy level of the electric vehicle for navigating along the one or more routes based on the available energy and the consumed energy; and
determine range of the electric vehicle based on the remaining energy level and the predicted energy consumption along the one or more routes.

24. The range predicting system as claimed in claim 23, wherein the plurality of input data comprises data provided by one or more electronic devices communicatively connected with the electric vehicle, route related data, weather related data and vehicle parameter data.

25. The range predicting system as claimed in claim 23, wherein the first subset of the plurality of input data used for predicting energy consumption comprises route related data, the vehicle parameter data, data provided by one or more electronic devices communicatively connected with the electric vehicle, and weather related data.

26. The range predicting system as claimed in claim 23, wherein to predict the energy consumption along the one or more routes between the source location and the destination location based on the first subset of the plurality of input data, the processor is configured to perform for each of a plurality of steps of each of the one or more routes:

determine step acceleration energy based on a step distance and a step duration predicted relative to route related data for the step distance, weather related data for the step distance, and vehicle parameter data, using a first data based model or a second data based model or a third data based model;

determine a step elevation energy, using the physics based model, based on,

mass of the electric vehicle and acceleration due to gravity received as part of the vehicle parameter data, angle of elevation determined using elevation information received from the route related data, and the step distance and the step duration;

determine a step friction energy, using the physics based model, based on,

rolling friction co-efficient received as part of the vehicle parameter data, mass of the electric vehicle and acceleration due to gravity received as part of the vehicle parameter data, angle of elevation determined using the elevation information received from the route related data, and the step distance;

determine a step drag energy, using the physics based model, based on,

air density, aerodynamic drag co-efficient of the electric vehicle and cross-sectional area of the electric vehicle received as part of the vehicle parameter data, wind speed along the route received as part of the weather related data, the step distance and the step duration, an average speed of the electric vehicle for covering the step distance, and a compensation factor derived from historical data of the electric vehicle;

determine a step traction energy consumption indicating energy predicted to be consumed for covering the step distance of each of the plurality of steps based on the corresponding step acceleration energy, the step elevation energy, the step friction energy and the step drag energy, using a fourth data based model;

determine a route traction energy consumption indicating total energy predicted to be consumed for covering the total distance of the route from the source location to the destination location, based on summation of the step traction energy determined for each of the plurality of steps;

determine an auxiliary energy consumption along the route for navigation based on predicted power consumption of auxiliary systems configured in the electric vehicle; and

predict the energy consumption along the route by combining the route traction energy consumption and the auxiliary energy consumption determined for the route.

27. The range predicting system as claimed in claim 26, wherein the first data based model used for determining the step acceleration energy is pre-trained, wherein to train the first data based model, the processor is configured to:

retrieve historical data and vehicle parameter data related to each of a plurality of trips of the electric vehicle, wherein the historical data comprises at least one of different road conditions and weather conditions during the trip, speed of the electric vehicle under the different road conditions and weather conditions, and time taken by the electric vehicle to travel along the different road conditions and weather conditions;

divide the historical data of each of the plurality of trips into a plurality of segments;

determine for each segment of each trip, average speed and specific acceleration energy based on distance of the segment, instantaneous speed of the electric vehicle along the segment, time taken by the electric vehicle to travel along the segment, road conditions along the segment and weather conditions along the segment, and the vehicle parameter data;

train the first data based model by generating labelled data comprising input as the average speed and powers of the average speed of the electric vehicle, and output as the specific acceleration energy corresponding to the average speed of the electric vehicle, for different types of the road conditions and the weather conditions; and

validate the first data based model and rectifying error percentages based on a feedback received from the first data based model.

28. The range predicting system as claimed in claim 26, wherein the second data based model used for determining the step acceleration energy is pre-trained, wherein to train the second data based model, the processor is configured to:

retrieve historical data and vehicle parameter data related to each of a plurality of trips of the electric vehicle, wherein the historical data comprises at least one of different road conditions and weather conditions during the trip, speed of the electric vehicle under the different road conditions and weather conditions, and time taken by the electric vehicle to travel along the different road conditions and weather conditions;

divide the historical data of each of the plurality of trips into a plurality of segments;

determine for each of the plurality of segments of each trip, an average speed and a specific acceleration energy based on distance of the segment, instantaneous speed of the electric vehicle along the segment, time taken by the electric vehicle to travel along the segment, road conditions along the segment and weather conditions along the segment, and the vehicle parameter data;

determine one or more statistical features from a specific acceleration energy distribution formed using the average speed and the corresponding specific acceleration energy determined for each of the plurality of segments of each trip, wherein the one or more statistical features comprises at least one of mean, median, mode, maximum and minimum acceleration energy;

train the second data based model by using the one or more statistical features corresponding to each average speed of the electric vehicle as input and the specific acceleration energy corresponding to the average speed of the electric vehicle, for different types of the road conditions and the weather conditions, as output; and

validate the second data based model and rectifying error percentages based on a feedback received from the second data based model.

29. The range predicting system as claimed in claim 26, wherein the third data based model used for determining the step acceleration energy is pre-trained, wherein the third data based model further comprises a plurality of sub-third data based models, wherein the plurality of sub-third data based models are a low sub-third data based model, a medium sub-third data based model and a high sub-third data based model, wherein to train the third data based model, the processor is configured to:

retrieve historical data and vehicle parameter data related to each of a plurality of trips of the electric vehicle, wherein the historical data comprises at least one of different road conditions, weather conditions and on-road traffic conditions during the trip, speed of the electric vehicle under the different road conditions, the on-road traffic conditions and weather conditions, and time taken by the electric vehicle to travel along the different road conditions, the on-road traffic conditions and weather conditions;

divide the historical data of each of the plurality of trips into a plurality of segments;

determine for each of the plurality of segments of each trip, an average speed and a specific acceleration energy based on distance of the segment, instantaneous speed of the electric vehicle along the segment, time taken by the electric vehicle to travel along the segment, road conditions along the segment and weather conditions along the segment, and the vehicle parameter data;

segregate the specific acceleration energy corresponding to average speed of each segment into one of a low acceleration energy category, a medium acceleration energy category and a high acceleration energy category based on thresholds corresponding to the low acceleration energy category and the medium acceleration energy category;

train based on the segregation, the low sub-third data based model, the medium sub-third data based model and the high sub-third data based model, using the average speed of the electric vehicle and powers of the average speed as input and the corresponding specific acceleration energies belonging to the low acceleration energy category, the medium acceleration energy category and the high acceleration energy category, for different types of the road conditions, the on-road traffic conditions and the weather conditions, as output; and

validate the low sub-third data based model, the medium sub-third data based model and the high sub-third data based model and rectifying error percentages based on a feedback received from the low sub-third data based model, the medium sub-third data based model and the high sub-third data based model.

30. The range predicting system as claimed in claim 29, wherein the thresholds corresponding to the low acceleration energy category and the medium acceleration energy category are determined by the processor, wherein to determine the thresholds the processor is configured to:

determine the one or more statistical features from a specific acceleration energy distribution formed using the average speed and the corresponding specific acceleration energy determined for each of the plurality of segments of each trip, wherein the one or more statistical features comprises maximum and minimum acceleration energy; and

determine the thresholds corresponding to the low acceleration energy category and the medium acceleration energy category based on the maximum and minimum acceleration energy.

**31.** The range predicting system as claimed in claim 29, wherein to determine, in real-time, the step acceleration energy using the third data based model, the processor is configured to:

determine a specific acceleration energy belonging to the low acceleration energy category, a specific acceleration energy belonging to the medium acceleration energy category, and a specific acceleration energy belonging to the high acceleration energy category, based on a step distance and a step duration, and route related data and weather related data for the step distance and the step duration;

determine a probability of occurrence of the specific acceleration energy belonging to the low acceleration energy category ($P_L$), a probability of occurrence of the specific acceleration energy belonging to the medium acceleration energy category ($P_M$), and a probability of occurrence of the specific acceleration energy belonging to the high acceleration energy category ($P_H$), based on the route related data, on-road traffic conditions and the weather related data, using a probability data based model;

generate,

a first result by correlating the specific acceleration energy belonging to the low acceleration energy category and the probability of occurrence of the specific acceleration energy belonging to the low acceleration energy category;

a second result by correlating the specific acceleration energy belonging to the medium acceleration energy category and the probability of occurrence of the specific acceleration energy belonging to the medium acceleration energy category; and

a third result by correlating the specific acceleration energy belonging to the high acceleration energy category and the probability of occurrence of the specific acceleration energy belonging to the high acceleration energy category;

and

determine the step acceleration energy for the step distance based on a combination of the first result, the second result and the third result, vehicle mass and the step distance.

**32.** The range predicting system as claimed in claim 31, wherein the probability data based model is pre-trained, wherein to train the probability data based model, the processor is configured to:

retrieve historical data and vehicle parameter data related to each of a plurality of trips of the electric vehicle as training input, wherein the historical data comprises at least one of different road conditions, weather conditions during the trip, on-road traffic conditions during the trip, speed of the electric vehicle under the different road conditions, the on-road traffic conditions and weather conditions, time taken by the electric vehicle to travel along the different road conditions, the on-road traffic conditions and weather conditions;

divide the historical data of each of the plurality of trips into a plurality of segments;

determine for each of the plurality of segments of each trip, an average speed and a specific acceleration energy based on distance of the segment, instantaneous speed of the electric vehicle along the segment, time taken by the electric vehicle to travel along the segment, road conditions along the segment, the on-road traffic conditions and weather conditions along the segment, and the vehicle parameter data;

segregate the specific acceleration energy corresponding to each average speed into one of the low acceleration energy category, the medium acceleration energy category and the high acceleration energy category based on thresholds corresponding to the low acceleration energy category and the medium acceleration energy category;

compute the probability of occurrence of the specific acceleration energy belonging to the low acceleration energy category ($P_L$), the probability of occurrence of the specific acceleration energy belonging to the medium acceleration energy category ($P_M$), and the probability of occurrence of the specific acceleration energy belonging to the high acceleration energy category ($P_H$), using a segregated acceleration energy distribution which is generated based on a result of the segregation;

train the probability data based model by providing the training input and output as the corresponding probability of occurrence of the specific acceleration energy belonging to the low acceleration energy category ($P_L$), the probability of occurrence of the specific acceleration energy belonging to the medium acceleration energy category ($P_M$), and the probability of occurrence of the specific acceleration energy belonging to the high acceleration energy category ($P_H$), corresponding to each average speed, for different types of the road conditions, the on-road traffic conditions and the weather conditions; and

validate the probability data based model and rectifying error percentages based on a feedback received from the probability data based model.

33. The range predicting system as claimed in claim 26, wherein the fourth data based model used for determining the step traction energy consumption is pre-trained, wherein to train the fourth data based model, the processor is configured to:

retrieve historical data, vehicle parameter data and route related data related to each of a plurality of trips of the electric vehicle, wherein the historical data comprises at least one of different road conditions and weather conditions during the trip, speed of the electric vehicle under the different road conditions and weather conditions, and time taken by the electric vehicle to travel along the different road conditions and weather conditions;

determine for each step distance of each trip, step acceleration energy, step elevation energy, step friction energy, and step drag energy based on the historical data, the vehicle parameter data and the route related data related to each corresponding trip;

train the fourth data based model by generating labelled data comprising input as the step acceleration energy, the step elevation energy, the step friction energy, the step drag energy, the step distance, step duration and ambient temperature, and output as step traction energy consumption for the corresponding input; and

validate the fourth data based model and rectifying error percentages based on a feedback received from the fourth data based model.

34. The range predicting system as claimed in claim 23, wherein the second subset of the plurality of input data used for determining the available energy comprises an initial energy level at the source location of the electric vehicle received as part of the data provided by one or more electronic devices configured in the electric vehicle, and battery capacity received as part of the vehicle parameter data.

35. The range predicting system as claimed in claim 23, wherein the third subset of the plurality of input data used for determining the consumed energy comprises an initial energy level at the source location of the electric vehicle, Global Positioning System (GPS) data and user input received as part of data provided by one or more electronic devices communicatively connected with the electric vehicle, route related data, vehicle parameter data and weather related data.

36. The range predicting system as claimed in claim 23, wherein to determine the consumed energy of the electric vehicle while navigating along the one or more routes based on the third subset of the plurality of input data, the processor is configured to:

determine traction energy consumption between two consecutive points of the route along which the electric vehicle is navigating based on,

distance between the two consecutive points, time taken to cover the distance between the two consecutive points, and speed of the electric vehicle while covering the distance between the two consecutive points derived based on position-time series information received as part of GPS data,

elevation information received from route related data,

air density received from weather related data, and

mass of the electric vehicle, aerodynamic drag co-efficient of the electric vehicle, cross-sectional area of the electric vehicle, rolling friction co-efficient and acceleration due to gravity received as part of the vehicle parameter data

determine auxiliary energy consumption between the two consecutive points based on power consumption of auxiliary systems configured in the electric vehicle; and

determine the consumed energy of the electric vehicle between the two consecutive points based on summation of the traction energy consumption and the auxiliary energy consumption determined between the two consecutive points.

37. The range predicting system as claimed in claim 36, wherein one point of the two consecutive points is a point at which a former consumed energy was determined, and another point is the point at which present consumed energy is to be determined.

38. The range predicting system as claimed in claim 36, wherein the auxiliary systems configured in the electric vehicle comprises at least one of Heating Ventilation and Air Conditioning (HVAC) system, lighting system, battery cooling system, audio system, window controlling system, wiper system, Supplemental Restraint System and other auxiliary systems configured in the electric vehicle.

39. The range predicting system as claimed in claim 23, wherein the consumed energy and the corresponding remaining energy level of the electric vehicle are determined at each predefined time interval.

40. The range predicting system as claimed in claim 23, wherein the processor is further configured to select a route among the one or more routes for navigation, wherein the selected route is one of, an optimal route that is predicted to consume minimum energy compared to rest of the one or more routes, a route that comprises sufficient charging stations for charging the electric vehicle, or a route selected by a user for navigation among the one or more routes, whose predicted energy consumption is less than the available energy.

41. The range predicting system as claimed in claim 23, wherein the energy source degradation model is trained to determine the energy degradation factor based on historical data related to the electric vehicle comprising at least one of total energy extracted by the electric vehicle, total distance travelled by the electric vehicle, idle time of the electric vehicle, age of energy source of the electric vehicle, and frequency of high acceleration operations of the electric vehicle.

42. The range predicting system as claimed in claim 41, wherein the energy degradation factor is a value ranging between 0 and 1, wherein "1" indicates a completely degraded energy source and "0" indicates a completely healthy energy source.

43. The range predicting system as claimed in claim 23, wherein to determine the range of the electric vehicle, when the predicted energy consumption is greater than or equal to the remaining energy level of the electric vehicle, the processor is configured to:

   search nearest values to the available energy from the predicted energy consumption array determined for the one or more routes; and
   determine an intermediate value based on the nearest values of the predicted energy consumption to the available energy and a distance corresponding to the nearest values of the predicted energy consumption, wherein the determined intermediate value is the range of the electric vehicle.

44. The range predicting system as claimed in claim 23, wherein the processor determines the range of the electric vehicle, when the predicted energy consumption is less than the remaining energy level of the electric vehicle, based on the predicted energy, the remaining energy level and a distance corresponding to the predicted energy consumption.

**FIG.1A (PRIOR ART)**

**FIG.1B (PRIOR ART)**

**200**

One or more sources **201**

Source **201₁**
(Eg: User inputs and data from electronic devices)

Source **201₂**
(Eg: vehicle parameter database)

Source **201₃**
(Eg: Digital weather service)

Source **201ₙ**
(Eg: Digital Map service)

Range predicting system **203**

Processor **205**

I/O interface **207**

Memory **209**

Historical database **204**

**FIG.2A**

One or more sources **201**

| Source **201₁** (Eg: Electronic devices) |

User inputs and data from electronic devices →

| Source **201₂** (Eg: Vehicle parameter database) |

Vehicle parameter data →

| Source **201₃** (Eg: Digital weather service) |

Weather related data →

| Source **201₄** (Eg: Digital Map service) |

Route related data →

| Energy degradation source model |
DF ↓

| Determine Available energy | → | Determine Remaining energy level | → | Determine Range |

| Determine consumed energy |

| Predict energy consumption |
P.E along Route 1
P.E along Route 2
○
○
○
P.E along Route n

**FIG.2B**

Range predicting system **203**

| Processor **205** | I/O interface **207** |

Memory **209**

Data **303**

| Input data **307** | Predicted data **309** | Available energy data **311** |

| Consumed energy data **313** | Remaining energy data **315** | Range data **317** |

Other data **319**

Modules **305**

| Receiving module **331** | Energy consumption predicting module **333** | Energy parameters determining module **335** |

| Range predicting module **337** | | Other modules **339** |

**FIG.3A**

**FIG.3B**

**FIG.3C**

EP 3 992 023 A1

Retrieve historical data and vehicle parameter data related to plurality of trips of electric vehicle ⟋ 341

Divide the historical data of each of the plurality of trips into a plurality of segments ⟋ 343

Determine , for each segment of each trip, average speed and specific acceleration energy based on distance of the segment, instantaneous speed of the electric vehicle along the segment, time taken by the electric vehicle to travel along the segment, road conditions and weather conditions along the segment, and the vehicle parameter data ⟋ 345

Train the first data based model by generating labelled data comprising input as the average speed and powers of the average speed of the electric vehicle, and output as the specific acceleration energy corresponding to the average speed of the electric vehicle, for different types of the road conditions and the weather conditions ⟋ 347

Validate the first data based model and rectifying error percentages based on a feedback received from the first data based model ⟋ 349

**FIG.3D**

| Segment Average Speed V (km/h) | Power of the average speed (V²) | Segment Specific Acceleration Energy (J/kg/km) |
|---|---|---|
| 27.8 | 772.84 | 114.33 |
| 61.2 | 3745.4 | 55.04 |
| 28.59 | 817.38 | 131.06 |
| 34.66 | 1201.3 | 136.17 |
| 42.9 | 1840.4 | 116.23 |
| 63.04 | 3974.1 | 24.52 |
| 53.5 | 2862.3 | 47.27 |
| 38.61 | 1490.7 | 91.84 |

**FIG.3E**

Retrieve historical data and vehicle parameter data related to plurality of trips of electric vehicle — 351

Divide the historical data of each of the plurality of trips into a plurality of segments — 352

Determine for each segment of each trip, average speed and specific acceleration energy based on distance of the segment, instantaneous speed of the electric vehicle along the segment, time taken by the electric vehicle to travel along the segment, road conditions and weather conditions along the segment, and the vehicle parameter data — 353

Determine one or more statistical features from a specific acceleration energy distribution formed using the average speed and the corresponding specific acceleration energy determined for each of the plurality of segments of each trip — 354

Train the second data based model by using one or more statistical features corresponding to each average speed as input and specific acceleration energy corresponding to the average speed of the electric vehicle, for different types of the road conditions and the weather conditions, as output — 355

Validate the second data based model and rectifying error percentages based on a feedback received from the first data based model — 356

**FIG.3F**

FIG.3G (1)

FIG.3G (2)

Retrieve historical data and vehicle parameter data related to plurality of trips of electric vehicle — 361

Divide the historical data of each of the plurality of trips into a plurality of segments — 362

Determine for each segment of each trip, average speed and specific acceleration energy based on distance of the segment, instantaneous speed of the electric vehicle along the segment, time taken by the electric vehicle to travel along the segment, road, traffic and weather conditions along the segment, and the vehicle parameter data — 363

Segregate the specific acceleration energy corresponding to average speed of each segment into one of a low acceleration energy category, a medium acceleration energy category and a high acceleration energy category based on thresholds corresponding to the low acceleration energy category and the medium acceleration energy category — 364

Train the low, medium and high sub-third data based models, using the average speed of the electric vehicle and powers of the average speed as input and the corresponding specific acceleration energies belonging to the low, medium and high acceleration energy categories, for different types of the road conditions, the on-road traffic conditions and the weather conditions, as output — 365

Validate low, medium and high sub-third data based models and rectifying error percentages based on a feedback received from the low, medium and high sub-third data based models — 366

**FIG.3H**

**FIG.3I**

Retrieve historical data and vehicle parameter data related to plurality of trips of electric vehicle as training input — 371

Divide the historical data of each of the plurality of trips into a plurality of segments — 372

Determine for each segment of each trip, average speed and specific acceleration energy based on distance of the segment, instantaneous speed of the electric vehicle along the segment, time taken to travel along the segment, road, traffic and weather conditions along the segment, and the vehicle parameter data — 373

Segregate the specific acceleration energy corresponding to average speed of each segment into one of a low, medium and high acceleration energy category based on thresholds corresponding to the low, medium and high acceleration energy category — 374

Compute probability of occurrence of specific acceleration energy belonging to low, medium and high acceleration energy categories using a segregated acceleration energy distribution which is generated based on a result of segregation — 375

Train the probability data based model by providing the training input and output as corresponding probability of occurrence corresponding to low, medium and high acceleration energy categories, for different types of the road conditions, the on-road traffic conditions and the weather conditions, as output — 376

Validate the probability data based model and rectifying error percentages based on a feedback received from the probability data based model — 377

**FIG.3J**

| Step Normal Average Speed (km/h) | Step traffic Average Speed (km/h) | Step Distance (km) | Traffic Congestion Indicator | Road Geometric Features (# Intersection/Curves) | Road Type | Average Positive Elevation Change (m) | Average Negative Elevation Change (m) | Weather Condition |
|---|---|---|---|---|---|---|---|---|
| 24 | 19 | 7.2 | 0.7 | 3 | City | 2 | 0 | Sunny |
| 24 | 29 | 16.2 | 0.2 | 2 | City | 3 | 1 | Sunny |
| 64 | 68 | 35 | 0.3 | 0 | Highway | 0.5 | 0.8 | Rainy |
| 45 | 46 | 14 | 0.4 | 2 | Rural | 10.3 | 6.4 | Rainy |

FIG.3K (1)

| $P_L$ | $P_M$ | $P_H$ |
|-------|-------|-------|
| 0.3 | 0.1 | 0.6 |
| 0.4 | 0.4 | 0.2 |
| 0.4 | 0.5 | 0.1 |
| 0.2 | 0.6 | 0.2 |

**FIG.3K (2)**

$$y(x) = a \exp(b\,x) + c$$
$$a = 7.3445$$
$$b = -0.423$$
$$c = 1.1993$$
$$R = 0.96924 \ (\text{lin})$$

Average Speed (m/s)

**FIG.3L**

Retrieve historical data and vehicle parameter data related to plurality of trips of electric vehicle — 381

Divide the historical data of each of the plurality of trips into a plurality of segments — 382

Determine , for each step distance of each trip, step acceleration energy, step elevation energy, step friction energy, step drag energy based on historical data, vehicle parameter data and route related data corresponding to each trip — 383

Train the fourth data based model by generating labelled data comprising input as the step distance, the step duration, the step acceleration energy, step elevation energy, step friction energy, step drag energy and ambient temperature, and output as step traction energy for corresponding input — 384

Validate the fourth data based model and rectifying error percentages based on a feedback received from the first data based model — 385

FIG.3M

| Acceleration Energy (kWh) | Friction Energy (kWh) | Elevation Energy (kWh) | Drag Energy (kWh) | Distance (km) | Duration (hrs) | Ambient Temperature (degC) | Battery Energy Consumed (kWh) |
|---|---|---|---|---|---|---|---|
| 0.23 | 0.09 | 0.1 | 0.18 | 6.2 | 0.43 | 15 | 0.86 |
| 0.39 | 0.17 | 0.13 | 0.23 | 10.4 | 0.62 | 21 | 1.4 |
| 0.12 | 0.07 | 0.04 | 0.09 | 2.7 | 0.26 | 35 | 0.48 |
| 0.63 | 0.31 | 0.34 | 0.41 | 14.8 | 0.38 | 10 | 2.23 |
| 0.59 | 0.38 | 0.44 | 0.42 | 24.1 | 0.53 | 26 | 2.61 |
| 0.083 | 0.018 | 0.011 | 0.027 | 1.3 | 0.13 | 32 | 0.2 |

FIG.3N

y(x) = a exp(b x)
a = 0.029436
b = 0.060616
R = 0.84684 (lin)

**FIG.3O (1)**

y(x) = a exp(x / b)
a = 0.013901
b = 8.1244
R = 0.95875 (lin)

**FIG.3O (2)**

| Age of Battery (years) | Total Energy Extracted (kWh) | Total Distance Travelled (km) | Idle Time (years) | Frequency of High Acceleration Events (Counts) | Battery Degradation Factor |
|---|---|---|---|---|---|
| 1 | 704 | 4878 | 0.93 | 123 | 0.07 |
| 3 | 1748 | 12367 | 2.6 | 292 | 0.1 |
| 0.5 | 687 | 4323 | 0.4 | 84 | 0.03 |
| 0 | 0 | 0 | 0 | 0 | 0 |
| 1 | 313 | 2212 | 0.98 | 71 | 0.05 |
| 4.5 | 2931 | 23451 | 3.47 | 462 | 0.19 |
| 1 | 647 | 4623 | 0.94 | 44 | 0.04 |

**FIG.3P**

FIG.3Q

Source **201₃**
(Eg: Digital weather service)

Weather related data – air density

Source **201₄**
(Eg: Digital Map service)

Route related data - Elevation

Determine angle of elevation

Source **201₁**
(Eg: electronic devices)

GPS data

Determine distance between consecutive points

Source **201₂**
(Eg: Vehicle parameter database)

Determine duration to cover distance between consecutive points

Determine traction energy between consecutive points

+

Σ

Consumed energy

Determine auxiliary energy

Vehicle parameter data – mass of vehicle, cross-sectional area, friction co-efficient, drag co-efficient

User input: A/C flag

**FIG.3R**

**FIG.3S (1)**

| Route ID | Distance (meter) | Predicted energy consumption (Joules) |
|---|---|---|
| $R1_{1-2}$ | 100 | 3 |
| $R1_{1-3}$ | 200 | 9 |
| $R1_{1-4}$ | 300 | 11 |
| $R2_{1-2}$ | 100 | 4 |
| $R2_{1-4}$ | 200 | 10 |

**FIG.3S (2)**

**FIG.3T**

**400**

Receive a plurality of input data from one or more data sources — 401

Predict energy consumption along one or more routes between a source location and a destination location provided for the electric vehicle, based on a first subset of the plurality of input data using at least one of data based models and a physics based model — 403

Determine available energy of the electric vehicle based on a second subset of the plurality of input data and an energy degradation factor determined using an energy source degradation model — 405

Determine consumed energy of the electric vehicle while navigating along the one or more routes, based on a third subset of the plurality of input data — 407

Determine remaining energy level of the electric vehicle for navigating along the one or more routes based on the available energy and the consumed energy — 409

Determine range of the electric vehicle based on the remaining energy level and the predicted energy consumption along the one or more routes — 411

FIG.4

| INPUT DEVICES 511 | OUTPUT DEVICES 512 |

I/O INTERFACE 501

COMPUTER SYSTEM 500

PROCESSOR 502

NETWORK INTERFACE 503

STORAGE INTERFACE 504

MEMORY 505

USER INTERFACE 506

OPERATING SYSTEM 507

WEB BROWSER 508

DATA SOURCE 201₁

DATA SOURCE 201ₙ

COMMUNICATION NETWORK 509

HISTORICAL DATABASE 204

**FIG.5**

Europäisches
Patentamt

European
Patent Office

Office européen
des brevets

# EUROPEAN SEARCH REPORT

Application Number

EP 21 20 4438

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/226850 A1 (BOWER LAURA E [US]) 16 July 2020 (2020-07-16) | 1-15, 17-37, 39-44 | INV. B60L58/16 |
| Y | * paragraph [0012] * <br> * paragraph [0033] * <br> * paragraph [0040] – paragraph [0041] * <br> * paragraph [0044] – paragraph [0048] * <br> * paragraph [0050] * <br> * paragraph [0052] – paragraph [0053] * <br> * figures 3,5 * | 16,38 | |
| Y | CN 111 038 334 A (HUMAN HORIZONS JIANGSU TECH CO LTD) 21 April 2020 (2020-04-21) | 16,38 | |
| A | * paragraph [0053] – paragraph [0095] * <br> * paragraph [0097] * | 1-15, 17-37, 39-44 | |
| A | CN 111 452 794 A (SAIC MOTOR CORP LTD) 28 July 2020 (2020-07-28) * paragraph [0035] – paragraph [0038] * * paragraph [0047] – paragraph [0049] * * paragraph [0166] – paragraph [0167] * * paragraph [0189] – paragraph [0190] * * paragraph [0284] * | 1-44 | TECHNICAL FIELDS SEARCHED (IPC) <br><br> B60L |
| A | US 2017/038222 A1 (MEYER JASON [US] ET AL) 9 February 2017 (2017-02-09) * the whole document * | 1-44 | |

The present search report has been drawn up for all claims

| Place of search | Date of completion of the search | Examiner |
|---|---|---|
| The Hague | 16 March 2022 | Marín Saldaña, I |

EPO FORM 1503 03.82 (P04C01)

## ANNEX TO THE EUROPEAN SEARCH REPORT
## ON EUROPEAN PATENT APPLICATION NO.

EP 21 20 4438

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2022

| Patent document cited in search report | | Publication date | Patent family member(s) | | Publication date |
|---|---|---|---|---|---|
| US 2020226850 | A1 | 16-07-2020 | NONE | | |
| CN 111038334 | A | 21-04-2020 | NONE | | |
| CN 111452794 | A | 28-07-2020 | NONE | | |
| US 2017038222 | A1 | 09-02-2017 | CN | 105383496 A | 09-03-2016 |
| | | | DE | 102015113701 A1 | 03-03-2016 |
| | | | US | 2016061610 A1 | 03-03-2016 |
| | | | US | 2017038222 A1 | 09-02-2017 |

For more details about this annex : see Official Journal of the European Patent Office, No. 12/82